(19) Europäisches Patentamt / European Patent Office / Office européen des brevets

(11) **EP 4 779 705 A1**

(12) **EUROPEAN PATENT APPLICATION**
published in accordance with Art. 153(4) EPC

(43) Date of publication:
**22.07.2026 Bulletin 2026/30**

(21) Application number: **24877003.4**

(22) Date of filing: **18.09.2024**

(51) International Patent Classification (IPC):
*H01M 4/134* (2010.01)   *H01M 4/38* (2006.01)
*H01M 4/62* (2006.01)   *H01M 10/052* (2010.01)
*H01M 10/0562* (2010.01)

(52) Cooperative Patent Classification (CPC):
**H01M 4/134; H01M 4/38; H01M 4/62;**
**H01M 10/052; H01M 10/0562;** Y02E 60/10

(86) International application number:
**PCT/JP2024/033329**

(87) International publication number:
**WO 2025/079404 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023 JP 2023177010**

(71) Applicant: **GS Yuasa International Ltd.**
**Kisshoin, Minami-ku,**
**Kyoto-shi, Kyoto 601-8520 (JP)**

(72) Inventors:
• **KIKUCHI, Akifumi**
**Kyoto-shi, Kyoto 601-8520 (JP)**
• **ASHIDA, Yuya**
**Kyoto-shi, Kyoto 601-8520 (JP)**

(74) Representative: **Isarpatent**
**Patent- und Rechtsanwälte Part G mbB**
**Friedrichstrasse 31**
**80801 München (DE)**

(54) **NON-AQUEOUS ELECTROLYTE POWER STORAGE ELEMENT NEGATIVE ELECTRODE AND NON-AQUEOUS ELECTROLYTE POWER STORAGE ELEMENT**

(57)   A negative electrode for a non-aqueous electrolyte energy storage device according to one aspect of the present invention includes a negative electrode active material layer containing a negative electrode active material, a solid electrolyte, and a conductive agent, in which the negative electrode active material contains a substance to be alloyed with a lithium element, and the conductive agent contains a single-wall carbon nanotube.

[ FIG. 1 ]

**Description**

TECHNICAL FIELD

The present invention relates to a negative electrode for a non-aqueous electrolyte energy storage device and a non-aqueous electrolyte energy storage device.

BACKGROUND ART

Non-aqueous electrolyte secondary batteries, whose typical examples are lithium-ion secondary batteries, are often used in electronic devices such as personal computers and communication terminals, automobiles, and the like, owing to their high energy density. Generally, the non-aqueous electrolyte secondary battery includes: a pair of electrodes electrically isolated from each other; and a non-aqueous electrolyte interposed between the electrodes, and is configured to be charged and discharged by transfer of charge-transporting ions such as lithium ions between the two electrodes. As energy storage devices other than the non-aqueous electrolyte secondary batteries, capacitors such as lithium-ion capacitors, electric double layer capacitors, or the like, have also been widely used.

Recently, there has been proposed a non-aqueous electrolyte energy storage device for which a solid electrolyte, such as a sulfide solid electrolyte, an oxide solid electrolyte, or a polymer solid electrolyte, is being used as a non-aqueous electrolyte instead of a non-aqueous electrolytic solution obtained by dissolving an electrolyte salt in a fluid such as a non-aqueous solvent. In addition, since an energy density of a silicon material (a silicon-based active material) as a negative electrode active material is higher than that of a carbon material (a carbon-based active material) such as graphite, for example, the silicon material is expected as a promising negative electrode active material. Patent Literature 1 describes an all-solid-state battery including a positive electrode layer, a solid electrolyte layer, and a negative electrode layer, in which the negative electrode layer contains a silicon material as a negative electrode active material. A substance, which is to be alloyed with a lithium element, apart from a silicon-based active material is also known as the negative electrode active material.

CITATION LIST

Patent Literature

Patent Literature 1: Japanese Unexamined Patent Application Publication No. 2021-082514

DISCLOSURE OF INVENTION

PROBLEMS TO BE SOLVED BY THE INVENTION

A substance to be alloyed with a lithium element, such as the silicon-based active material, is a negative electrode active material which undergoes a large volume change due to charge and discharge. Meanwhile, in the non-aqueous electrolyte energy storage device, it is desirable that coulombic efficiency, which is a ratio of a discharge capacity to a charge capacity, should be high. However, a non-aqueous electrolyte energy storage device for which a negative electrode containing a negative electrode active material, which undergoes a large volume change due to charge and discharge, and a solid electrolyte is used has such a disadvantage that the coulombic efficiency in initial charge and discharge (i.e., initial coulombic efficiency) is low. According to the findings of the inventors, in the second and subsequent charge and discharge, there is only a small difference in the coulombic efficiency between a non-aqueous electrolyte energy storage device using a substance to be alloyed with a lithium element as the negative electrode active material and a non-aqueous electrolyte energy storage device using other negative electrode active materials (for example, graphite). The initial coulombic efficiency being low means that a large amount of lithium ions, which serve as the charge-transporting ions that do not contribute to the second and subsequent charge and discharge, are produced by the initial charge. From the aspect of increasing the capacity of the non-aqueous electrolyte energy storage device, it is desirable that the initial coulombic efficiency should be high.

An object of the present invention is to provide a negative electrode for a non-aqueous electrolyte energy storage device which contains a substance to be alloyed with a lithium element and a solid electrolyte, and by which initial coulombic efficiency of the non-aqueous electrolyte energy storage device can be increased, and also a non-aqueous electrolyte energy storage device including such a negative electrode for a non-aqueous electrolyte energy storage device.

MEANS FOR SOLVING THE PROBLEMS

A negative electrode for a non-aqueous electrolyte energy storage device according to one aspect of the present invention includes a negative electrode active material layer containing a negative electrode active material, a solid electrolyte, and a conductive agent, in which the negative electrode active material contains a substance to be alloyed with a lithium element, and the conductive agent contains a single-wall carbon nanotube.

A non-aqueous electrolyte energy storage device according to another aspect of the present invention includes the negative electrode for a non-aqueous electrolyte energy storage device according to the one aspect of the present invention.

EFFECT OF THE INVENTION

According to any one of the aspects of the present invention, it is possible to provide a negative electrode for a non-aqueous electrolyte energy storage device which contains a substance to be alloyed with a lithium element and a solid electrolyte, and by which initial coulombic efficiency of the non-aqueous electrolyte energy storage device can be increased, and also a non-aqueous electrolyte energy storage device including such a negative electrode for a non-aqueous electrolyte energy storage device.

BRIEF DESCRIPTION OF DRAWINGS

FIG. 1 is a schematic cross-sectional view illustrating an embodiment of a non-aqueous electrolyte energy storage device of the present invention.

FIG. 2 is a schematic cross-sectional view illustrating a non-aqueous electrolyte energy storage device of an embodiment different from FIG. 1.

FIG. 3 is a schematic view illustrating an energy storage apparatus including a plurality of non-aqueous electrolyte energy storage devices according to an embodiment of the present invention.

DESCRIPTION OF EMBODIMENTS

First, outlines of a negative electrode for a non-aqueous electrolyte energy storage device and a non-aqueous electrolyte energy storage device disclosed in the present description will be described.

(1) A negative electrode for a non-aqueous electrolyte energy storage device according to one aspect of the present invention includes a negative electrode active material layer containing a negative electrode active material, a solid electrolyte, and a conductive agent, in which the negative electrode active material contains a substance to be alloyed with a lithium element, and the conductive agent contains a single-wall carbon nanotube.

The negative electrode for a non-aqueous electrolyte energy storage device according to (1) described above is a negative electrode for a non-aqueous electrolyte energy storage device containing a substance to be alloyed with a lithium element and a solid electrolyte, and can increase the initial coulombic efficiency of the non-aqueous electrolyte energy storage device. Although the reason for causing the above is not clarified, the following factors are presumed. The substance to be alloyed with a lithium element is a negative electrode active material which undergoes a large volume change due to charge and discharge as described above. In a conventional negative electrode for a non-aqueous electrolyte energy storage device including a negative electrode active material layer containing a substance to be alloyed with a lithium element and a solid electrolyte, cracks are formed in the negative electrode active material layer due to a large change in the volume of the negative electrode active material during initial charge and discharge. Isolation of the negative electrode active material due to the cracks is considered to be the cause of lowering the initial coulombic efficiency of the conventional negative electrode for a non-aqueous electrolyte energy storage device. In contrast, by making the negative electrode active material layer contain a single-wall carbon nanotube, mechanical strength of the negative electrode active material layer is increased, and cracks are less likely to be formed even when the volume of the negative electrode active material is changed largely. For the reasons given above, it is presumed that the negative electrode for a non-aqueous electrolyte energy storage device according to (1) described above can increase the initial coulombic efficiency of the non-aqueous electrolyte energy storage device.

The negative electrode for a non-aqueous electrolyte energy storage device according to (1) described above achieves the object, which is to provide a negative electrode for a non-aqueous electrolyte energy storage device which contains a substance to be alloyed with a lithium element and a solid electrolyte, and by which the initial coulombic efficiency of the non-aqueous electrolyte energy storage device can be increased, by using a single-wall carbon nanotube as the conductive agent. In the present disclosure, if it is confirmed that the initial coulombic efficiency of a non-aqueous electrolyte energy storage device has been increased when the non-aqueous electrolyte energy storage devices are compared under the same conditions except that the comparison target conductive agent in the negative electrode active material layer of the negative electrode for a non-aqueous electrolyte energy storage device does not contain any single-wall carbon nanotube, it is assumed that the above object has been achieved.

Further, the negative electrode for a non-aqueous electrolyte energy storage device according to (1) described above can also suppress a decrease in the discharge capacity after execution of a high-rate discharge (discharge at a high current density). That is, a sufficient discharge capacity can be secured even after a discharge has been performed at a high current density. Although the reason why such an effect is produced is also not clear, it is presumed that the mechanical strength of the negative electrode active material layer is increased by making the negative electrode active material layer contain a single-wall carbon nanotube, and thus occurrence of cracks in the negative electrode active material layer is suppressed even if the volume of the negative electrode active material is rapidly changed during a high-rate discharge.

(2) In the negative electrode for a non-aqueous electrolyte energy storage device according to (1) described above, a content of the single-wall carbon nanotube in the negative electrode active material layer may be 0.1% by mass or more and 3% by mass or less.

According to the negative electrode for a non-aqueous electrolyte energy storage device described in (2) above, a sufficient amount of single-wall carbon nanotube is present in the negative electrode active material layer. Thus, the initial coulombic efficiency of the non-aqueous electrolyte energy storage device can be further increased, for example.

(3) In the negative electrode for a non-aqueous electrolyte energy storage device according to (1) or (2) described above, a content of a fibrous conductive agent in the conductive agent may be 90% by mass or more.

According to the negative electrode for a non-aqueous electrolyte energy storage device described in (3) above, since a fibrous conductive agent is mainly used as the conductive agent, the mechanical strength of the negative electrode active material layer is further increased, for example. Thus, the initial coulombic efficiency of the non-aqueous electrolyte energy storage device can be further increased, for example.

The "fibrous conductive agent" refers to a conductive agent having a deformable elongated shape. A ratio (aspect ratio) of a length to a diameter (fiber diameter) of the fibrous conductive agent is, for example, 10 or more, preferably 100 or more, and more preferably 1000 or more. The diameter and the length of the fibrous conductive agent are obtained on the basis of an image of a scanning electron microscope (SEM) or a transmission electron microscope (TEM). Incidentally, single-wall carbon nanotubes are included in the fibrous conductive agent.

(4) In the negative electrode for a non-aqueous electrolyte energy storage device according to any one of (1) to (3) described above, a content of the single-wall carbon nanotube in the negative electrode active material layer may be 0.3% by mass or more.

According to the negative electrode for a non-aqueous electrolyte energy storage device described in (4) above, a particularly sufficient amount of single-wall carbon nanotube is present in the negative electrode active material layer. Thus, the initial coulombic efficiency of the non-aqueous electrolyte energy storage device can be further increased, for example.

(5) In the negative electrode for a non-aqueous electrolyte energy storage device according to any one of (1) to (4) described above, the substance to be alloyed with a lithium element may not have a three-dimensional network structure.

In a case where the substance to be alloyed with a lithium element has a three-dimensional network structure (typically, the case where the substance is porous), voids within the substance to be alloyed with a lithium element being formed by the three-dimensional network structure are also used as a space for allowing volume change, so that a change in the volume of such a substance during charge and discharge is small. For this reason, when such a negative electrode active material is used, cracks are not likely to be formed in the negative electrode active material layer in the first place, and the initial coulombic efficiency may not be low. However, such a substance to be alloyed with a lithium element having a three-dimensional network structure must be, for example, manufactured by a special manufacturing method, and thus productivity is low and the cost is raised. In contrast, in the negative electrode for a non-aqueous electrolyte energy storage device according to (5) described above, despite the fact that the substance to be alloyed with a lithium element does not have a three-dimensional network structure, the initial coulombic efficiency of the non-aqueous electrolyte energy storage device can be increased. Consequently, the negative electrode for a non-aqueous electrolyte energy storage device described in (5) above can achieve both high productivity and an increase in the initial coulombic efficiency of the non-aqueous electrolyte energy storage device. In addition, by applying the technique of the present invention to a negative electrode using, as a substance to be alloyed with a lithium element, a substance which does not have a three-dimensional network structure and undergoes a large volume change, it is possible to particularly remarkably obtain an advantage of suppressing the occurrence of cracks in the negative electrode active material layer and increasing the initial coulombic efficiency of the non-aqueous electrolyte energy storage device.

(6) In the negative electrode for a non-aqueous electrolyte energy storage device according to any one of (1) to (5) described above, an average pore size of the substance to be alloyed with a lithium element may be 30 nm or less.

In a case where the average pore size of the substance to be alloyed with a lithium element is greater than 30 nm (in other words, in the case where the porosity is high), voids within the substance to be alloyed with a lithium element forming the pores are also used as a space for allowing volume change, so that a change in the volume of such a substance during charge and discharge is small. For this reason, when such a negative electrode active material is used, cracks are not likely to be formed in the negative electrode active material layer in the first place, and the initial coulombic efficiency may not be low. Examples of such substances having the average pore size of more than 30 nm include those having the three-dimensional network structure as described above. However, such a highly porous substance to be alloyed with a lithium element must be, for example, manufactured by a special manufacturing method, and thus productivity is low and the cost is raised. In contrast, in the negative electrode for a non-aqueous electrolyte energy storage device according to (6) described above, despite the fact that the average pore size of the substance to be alloyed with a lithium element is 30 nm or less, the initial coulombic efficiency of the non-aqueous electrolyte energy storage device can be increased. Consequently, the negative electrode for a non-aqueous electrolyte energy storage device according to (6) described above can achieve both high productivity and an increase in the initial coulombic efficiency of the non-aqueous electrolyte energy storage device. In addition, by applying the technique of the present invention to a negative electrode using, as a substance to be alloyed with a lithium element, a substance whose average pore size is 30 nm or less and which undergoes a large volume change, it is possible to particularly remarkably obtain the advantage of suppressing the occurrence of cracks in the negative electrode active material layer and increasing the initial coulombic efficiency of the non-aqueous electrolyte energy storage device.

It is assumed that the "average pore size", and a "BET specific surface area", a "total pore volume", and an "average void ratio", which will be described later, of the substance to be alloyed with a lithium element are values obtained by measuring a pore size distribution by a method described below. The measurement of the pore size distribution is performed either on a substance to be alloyed with a lithium element before being subjected to charge and discharge, or a substance which has been treated by the following procedure if it is a substance to be alloyed with a lithium element contained in the negative electrode of the non-aqueous electrolyte energy storage device. First, a constant current discharge is performed for the non-aqueous electrolyte energy storage device at a current of 0.05 C until the voltage indicates a lower limit voltage at the time of normal use to bring the non-aqueous electrolyte energy storage device into a discharged state. Here, at the time of normal use refers to the case of using the non-aqueous electrolyte energy storage device by adopting charge and discharge conditions recommended or specified for this non-aqueous electrolyte energy storage device. Next, the non-aqueous electrolyte energy storage device in the discharged state is disassembled to take out the negative electrode, adhering constituents (a non-aqueous electrolyte and the like) are sufficiently washed and then drying is performed, and the substance to be alloyed with a lithium element is taken out.

The substance to be alloyed with a lithium element is subjected to vacuum drying at 150 °C for one hour as pretreatment. Pore size distribution measurement using a nitrogen adsorption method is performed for the pretreated substance to be alloyed with a lithium element. This measurement is performed by a "TriStar II" manufactured by Shimadzu Corporation. The measurement range is set to a pore size of 0.1 nm to 300 nm.

(BET Specific Surface Area)

Five points are extracted from a region of the obtained adsorption isotherm where P/P0 is from 0.06 to 0.3 (P/P0 = 0.06 to 0.3) to perform BET plotting, and the BET specific surface area is calculated from the y-intercept and the slope of the plotted straight line.

(Total Pore Volume)

From a total adsorbed gas quantity determined in the pore size distribution measurement, the BJH method is used to calculate a cumulative total volume on the adsorption side for a range of the pore size from 0.1 nm to 300 nm as the total pore volume.

(Average Pore Size)

If the pore is assumed to be cylindrical, a volume V of the pore and a surface area A of the pore are expressed as follows:

$$V = \pi(d/2)^2 H$$

$$A = \pi dH$$

d: pore size, H: depth of the pore (corresponding to the cylinder height)

In calculating the surface area, the area of a surface corresponding to a bottom surface of the cylinder can be ignored. From the above two equations, d = 4V/A is derived. Therefore, the average pore size d is calculated from the equation d = 4V/A by using the values of the BET specific surface A and the total pore volume V.

(Average Void Ratio)

The average void ratio is a value obtained by the product of the total pore volume ($cm^3$/g) and the true density (g/$cm^3$), which is expressed in percentage.

(7) In the negative electrode for a non-aqueous electrolyte energy storage device according to any one of (1) to (6) described above, an average particle size of the substance to be alloyed with a lithium element may be 0.6 $\mu$m or more.

In the negative electrode for a non-aqueous electrolyte energy storage device according to (7) described above, when the average particle size of the substance to be alloyed with a lithium element is 0.6 $\mu$m or more, the substance to be alloyed with a lithium element can be easily manufactured or handled. Meanwhile, in a conventional negative electrode for a non-aqueous electrolyte energy storage device, if the average particle size of the substance to be alloyed with a lithium element is relatively large, occurrence of cracks in the negative electrode active material layer due to a change in the volume of the substance to be alloyed with a lithium element and a decrease in the initial coulombic efficiency of the non-aqueous electrolyte energy storage device due to the cracks are likely to occur. Therefore, in the negative electrode for a non-aqueous electrolyte energy storage device according to (7) described above for which the technique of the present invention is applied to a negative electrode in which the average particle size of the substance to be alloyed with a lithium element is large as described above, it is possible to particularly remarkably obtain the advantage of suppressing the occurrence of cracks in the negative electrode active material layer and increasing the initial coulombic efficiency of the non-aqueous electrolyte energy storage device. In other words, according to the negative electrode for a non-aqueous electrolyte energy storage device described in (7) above, it is possible to achieve both facilitation of manufacturing or handling of a substance to be alloyed with a lithium element and an increase in the initial coulombic efficiency of the non-aqueous electrolyte energy storage device.

The "average particle size" refers to a value indicating 50% in a volume-based cumulative size distribution calculated according to JIS Z 8819-2:2001 on the basis of a particle size distribution measured by a laser diffraction and scattering method applied to a diluted solution in which particles are diluted with a solvent according to JIS Z 8825:2013. Also, the average particle size of the substance to be alloyed with a lithium element is a value of the substance before being subjected to charge and discharge or a value of the substance in a state in which it has been taken out from the non-aqueous electrolyte energy storage device for which a constant current discharge has been performed at a discharge current of 0.05 C until the voltage indicated a lower limit voltage at the time of normal use.

The following conditions are applied to the measurement of the average particle size of the substance to be alloyed with a lithium element.

Pretreatment: An ultrasonic generator, model number UD-100, manufactured by TOMY SEIKO CO., LTD. is used, in which the settings are made to tip: 3 mm$\varphi$, output power setting: 80%, and treatment time: 2 minutes.

Device: SALD 2200 manufactured by Shimadzu Corporation
Dispersion medium: water (refractive index: 1.333)
Cell: flow cell formula
Measurement range: 0.03 to 1000 $\mu$m
Particle refractive index: 3.85-0.01i
However, when coloring of a dispersion liquid is recognized, it is preferable that the set value of the particle refractive index be changed to "3.85-0.10i" in consideration of the coloring.

(8) In the negative electrode for a non-aqueous electrolyte energy storage device according to any one of (1) to (7) described above, the average particle size of the substance to be alloyed with a lithium element may be 1.5 $\mu$m or more.

According to the negative electrode for a non-aqueous electrolyte energy storage device described in (8) above, it is possible to achieve both easier manufacturing or handling of a substance to be alloyed with a lithium element and higher initial coulombic efficiency of the non-aqueous electrolyte energy storage device. Furthermore, according to the negative electrode for a non-aqueous electrolyte energy storage device described in (8) above, it is possible to suppress a decrease in the discharge capacity at the time of a high-rate discharge (discharge at a high current density). That is, a sufficient discharge capacity can be secured even when a discharge is performed at a high current density.

(9) In the negative electrode for a non-aqueous electrolyte energy storage device according to any one of (1) to (8) described above, a BET specific surface area of the substance to be alloyed with a lithium element may be 8.0 m$^2$/g or less.

The negative electrode for a non-aqueous electrolyte energy storage device according to (9) described above can also suppress a decrease in the discharge capacity at the time of a high-rate discharge.

(10) In the negative electrode for a non-aqueous electrolyte energy storage device according to any one of (1) to (9) described above, a content of the substance to be alloyed with a lithium element in the negative electrode active material layer may be 45% by mass or less.

The negative electrode for a non-aqueous electrolyte energy storage device according to (10) described above can also suppress a decrease in the discharge capacity at the time of a high-rate discharge.

(11) In the negative electrode for a non-aqueous electrolyte energy storage device according to any one of (1) to (10) described above, the conductive agent may further contain at least one kind of conductive agent selected from the group consisting of a fibrous conductive agent, which has an average diameter of 120 nm or more, and a particulate conductive agent.

According to the negative electrode for a non-aqueous electrolyte energy storage device described in (11) above, it is possible to suppress a decrease in the discharge capacity after execution of a high-rate discharge.

(12) In the negative electrode for a non-aqueous electrolyte energy storage device according to any one of (1) to (11) described above, a content of the single-wall carbon nanotube in the conductive agent may be 50% by mass or more.

Also with the negative electrode for a non-aqueous electrolyte energy storage device according to (12) described above, it is possible to suppress a decrease in the discharge capacity after execution of a high-rate discharge.

(13) A non-aqueous electrolyte energy storage device according to another aspect of the present invention includes the negative electrode for a non-aqueous electrolyte energy storage device described in any one of (1) to (12) above.

The non-aqueous electrolyte energy storage device according to (13) described above is a non-aqueous electrolyte energy storage device for which the negative electrode for a non-aqueous electrolyte energy storage device containing a substance to be alloyed with a lithium element and a solid electrolyte is used, and the initial coulombic efficiency is increased.

(14) The non-aqueous electrolyte energy storage device according to (13) described above may be an all-solid-state energy storage device.

The non-aqueous electrolyte energy storage device according to (14) described above is a non-aqueous electrolyte energy storage device for which the negative electrode for a non-aqueous electrolyte energy storage device containing a substance to be alloyed with a lithium element and a solid electrolyte is used, and the initial coulombic efficiency is increased. Thus, the above-mentioned non-aqueous electrolyte energy storage device is particularly useful as an all-solid-state energy storage device.

A negative electrode for a non-aqueous electrolyte energy storage device, a non-aqueous electrolyte energy storage device, an energy storage apparatus, and a method for manufacturing a non-aqueous electrolyte energy storage device according to one embodiment of the present invention, and other embodiments of the present invention will be described in detail. The names of constituent members (constituent elements) used in the embodiments may be different from the names of constituent members (constituent elements) used in the background art. In addition, a lower limit value and an upper limit value of each of the numerical ranges described in the embodiments of the present invention may be arbitrarily combined.

<Negative Electrode for Non-aqueous Electrolyte Energy Storage Device>

A negative electrode for a non-aqueous electrolyte energy storage device (hereinafter also referred to as a "negative electrode") according to one embodiment of the present invention includes a negative electrode substrate and a negative electrode active material layer which is disposed on the negative electrode substrate directly or via an intermediate layer.

(Negative Electrode Substrate)

The negative electrode substrate has conductivity. Whether or not the negative electrode substrate has "conductivity" is determined on the basis of a volume resistivity measured in conformity with JIS H 0505:1975, with 10$^{-2}$ Ω·cm being assumed as a threshold value. As the material of the negative electrode substrate, a metal such as copper, nickel, stainless steel, or nickel-plated steel, an alloy thereof, a carbon material, or the like is used. Among the above, copper or a copper alloy is preferable. Examples of the negative electrode substrate include a foil, a vapor-deposited film, a mesh, and a porous material, and a foil is preferable from the standpoint of cost. Therefore, a copper foil or a copper alloy foil should preferably be used for the negative electrode substrate. Examples of the copper foil include a rolled copper foil and an electrolytic copper foil.

An average thickness of the negative electrode substrate is preferably 2 μm or more and 35 μm or less, more

preferably 3 μm or more and 30 μm or less, still more preferably 4 μm or more and 25 μm or less, and particularly preferably 5 μm or more and 20 μm or less. When the average thickness of the negative electrode substrate is set to be within the above range, an energy density per volume of the non-aqueous electrolyte energy storage device can be increased while increasing the strength of the negative electrode substrate. The "average thickness" is intended as the average value of the thicknesses measured at arbitrary five points.

(Intermediate Layer)

The intermediate layer is a layer disposed between the negative electrode substrate and the negative electrode active material layer. As the intermediate layer contains a conductive agent such as carbon particles, contact resistance between the negative electrode substrate and the negative electrode active material layer is reduced. A configuration of the intermediate layer is not particularly limited, and contains, for example, a binder and a conductive agent.

(Negative Electrode Active Material Layer)

The negative electrode active material layer contains a negative electrode active material, a solid electrolyte, and a conductive agent. The negative electrode active material layer can be formed from the so-called negative electrode mixture containing the negative electrode active material, the solid electrolyte, and the conductive agent. The negative electrode active material layer contains, as necessary, optional ingredients such as a binder, a thickener, and a filler. It is not necessarily required that one or more kinds of these optional ingredients be substantially contained in the negative electrode active material layer.

The negative electrode active material contains a substance to be alloyed with a lithium element. Examples of the substance to be alloyed with a lithium element include a silicon-based active material, a tin-based active material, an aluminum-based active material, a magnesium-based active material, a zinc-based active material, and a germanium-based active material. Among the materials given above, the silicon-based active material is preferable as the substance to be alloyed with a lithium element. One or more kinds of the substances to be alloyed with a lithium element can be used.

The silicon-based active material refers to a substance which contains a silicon element and is to be alloyed with a lithium element. Examples of the silicon-based active material include a simple substance of silicon and a compound containing a silicon element. Examples of the compound containing the silicon element include a silicon oxide ($SiO_x$: $0 < x < 2$, preferably $0.8 \leq x \leq 1.2$), a silicon nitride, a silicon carbide, and a metal-silicon compound. Examples of the metal-silicon compound include compounds containing an element such as aluminum, tin, zinc, nickel, copper, titanium, vanadium, or magnesium, and a silicon element. Other than the above, the silicon-based active material may be a composite material such as an $SiO/Si/SiO_2$ composite material. A pre-doped material may be used as the silicon-based active material. That is, the silicon-based active material may further contain a lithium element. The silicon-based active material may be used alone or two or more kinds of the silicon-based active materials may be mixed and used. As the silicon-based active material, a simple substance of silicon or a silicon oxide is preferable, and the simple substance of silicon is more preferable.

A substance which is to be alloyed with a lithium element apart from the silicon-based active material is defined in the same way as the silicon-based active material. That is, a tin-based active material, for example, refers to a substance which contains a tin element and is to be alloyed with a lithium element. Examples of the substance to be alloyed with a lithium element include a simple substance of each element (tin, aluminum, or the like) and a compound containing each element. Examples of the compound containing each element include an oxide, a nitride, and a carbide of each element and a compound of each element and a metal element.

The substance to be alloyed with a lithium element may have a surface coated with a conductive substance such as a carbon material. By using the substance to be alloyed with a lithium element in such a form, electron conductivity of the negative electrode active material layer can be increased. When the substance to be alloyed with a lithium element is in the form of particles or the like coated with a conductive substance, a mass ratio of the conductive substance to a total quantity of the substance to be alloyed with a lithium element and the conductive substance coating this substance is, for example, preferably 1% by mass or more and 10% by mass or less, more preferably 2% by mass or more and 5% by mass or less.

The shape of the substance to be alloyed with a lithium element is not particularly limited, but a particulate form is preferable. A lower limit of the average particle size of the substance to be alloyed with a lithium element is, for example, preferably 0.1 μm, more preferably 0.5 μm, still more preferably 0.6 μm, yet still more preferably 1.5 μm, and may be 2.0 μm, 3.0 μm, 4.0 μm, 5.0 μm, 6.0 μm, 7.0 μm, or 8.0 μm. When the average particle size of the substance to be alloyed with a lithium element is set to be not less than the above-described lower limit, the substance to be alloyed with a lithium element is easily manufactured or handled. Moreover, in a case where the average particle size of the substance to be alloyed with a lithium element is relatively large, occurrence of cracks in the negative electrode active material layer due to a change in the volume of the substance to be alloyed with a lithium element and a decrease in the initial coulombic efficiency of the non-aqueous electrolyte energy storage device due to the cracks are likely to occur. Therefore, by applying the technique of the present invention to a negative electrode in which the average particle size of the substance to be alloyed with a lithium element is large as described above, it is possible to particularly remarkably obtain the advantage of suppressing the occurrence of cracks in the negative electrode active material layer and increasing the initial coulombic efficiency of the non-aqueous electrolyte energy storage device. In addition, as the average particle size of the substance to be alloyed with a lithium element is not less than the above-described lower limit, a decrease in the discharge capacity at the time of a high-rate discharge can be suppressed. An upper limit of the average particle size of the substance to be alloyed with a lithium element is, for example, preferably 20 $\mu$m, more preferably 10 $\mu$m, and may be 5.0 $\mu$m, 4.0 $\mu$m, 3.0 $\mu$m, or 2.0 $\mu$m. When the average particle size of the substance to be alloyed with a lithium element is set to be not more than the above-described upper limit, a change in the volume of the negative electrode active material layer is suppressed, and the initial coulombic efficiency of the non-aqueous electrolyte energy storage device can be further increased. In addition, when the average particle size of the substance to be alloyed with a lithium element is set to be not more than the above-described upper limit, a capacity retention rate to be exhibited after charge and discharge cycles can also be increased.

In order to obtain powder having a predetermined particle size, a pulverizer, a classifier, or the like, is used. Examples of a method of pulverization include a method using a mortar, a ball mill, a sand mill, a vibrating ball mill, a planetary ball mill, a jet mill, an opposed jet mill, a spiral jet mill, a sieve, or the like. In performing the pulverization, wet pulverization in which water or an organic solvent such as hexane is present can also be used. As a method of classification, a sieve, an air classifier, or the like, is used as necessary in both a dry method and a wet method.

The substance to be alloyed with a lithium element may be one that does not have a three-dimensional network structure. The substance to be alloyed with a lithium element may be one that is not be porous. Such a substance to be alloyed with a lithium element can be relatively easily manufactured, and thus productivity can be increased, and the manufacturing cost can be suppressed, for example. Also, in a case where the substance to be alloyed with a lithium element does not have a three-dimensional network structure and is not porous, a change in the volume during charge and discharge is generally large. Therefore, when the technique of the present invention is applied to a negative electrode for a non-aqueous electrolyte energy storage device in which such a substance to be alloyed with a lithium element is used, it is possible to particularly remarkably obtain the advantage of suppressing the occurrence of cracks in the negative electrode active material layer and increasing the initial coulombic efficiency of the non-aqueous electrolyte energy storage device.

An upper limit of the average pore size of the substance to be alloyed with a lithium element is preferably 30 nm, more preferably 20 nm, still more preferably 15 nm, and yet still more preferably 12 nm. A substance which is to be alloyed with a lithium element having a small average pore size, in other words, a substance which is to be alloyed with a lithium element being low in porosity can be relatively easily manufactured, and thus productivity can be increased, and the manufacturing cost can be suppressed, for example. In addition, in the case of substances to be alloyed with a lithium element, when the average pore size is small, the porosity is low and a change in the volume during charge and discharge tends to be large in general. Therefore, when the technique of the present invention is applied to a negative electrode for a non-aqueous electrolyte energy storage device in which such a substance to be alloyed with a lithium element is used, it is possible to particularly remarkably obtain the advantage of suppressing the occurrence of cracks in the negative electrode active material layer and increasing the initial coulombic efficiency of the non-aqueous electrolyte energy storage device. A lower limit of the average pore size of the substance to be alloyed with a lithium element is preferably 1 nm, and may be 3 nm or 5 nm.

An upper limit of the BET specific surface area of the substance to be alloyed with a lithium element is, for example, preferably 50 $m^2$/g, more preferably 30 $m^2$/g, and may be 20 $m^2$/g, 10 $m^2$/g, 8.0 $m^2$/g, 7.0 $m^2$/g, 6.0 $m^2$/g, 5.0 $m^2$/g, 4.0 $m^2$/g, or 3.0 $m^2$/g. In the case of substances to be alloyed with a lithium element, also when the BET specific surface area is small, the porosity is low and a change in the volume during charge and discharge tends to be large in general. Therefore, when the technique of the present invention is applied to a negative electrode for a non-aqueous electrolyte energy storage device in which such a substance to be alloyed with a lithium element is used, it is possible to particularly remarkably obtain the advantage of suppressing the occurrence of cracks in the negative electrode active material layer and increasing the initial coulombic efficiency of the non-aqueous electrolyte energy storage device. In addition, as the BET specific surface area of the substance to be alloyed with a lithium element is not more than the above-described upper limit, a decrease in the discharge capacity at the time of a high-rate discharge can be suppressed. A lower limit of the BET specific surface area of the substance to be alloyed with a lithium element is preferably 0.5 $m^2$/g, and may be 1.0 $m^2$/g, 2.0 $m^2$/g, 3.0 $m^2$/g, 4.0 $m^2$/g, 5.0 $m^2$/g, or 6.0 $m^2$/g. As the BET specific surface area of the substance to be alloyed with a lithium element is not less than the above-described lower limit, a capacity retention rate to be exhibited after charge and discharge cycles can be increased.

An upper limit of the total pore volume of the substance to be alloyed with a lithium element is, for example, preferably 0.2 $cm^3$/g, more preferably 0.1 $cm^3$/g, and may be 0.05 $cm^3$/g. In the case of substances to be alloyed with a lithium element, also when the total pore volume is small, the porosity is low and a change in the volume during charge and discharge tends to be large in general. Therefore, when the technique of the present invention is applied to a negative electrode for a non-aqueous electrolyte energy storage device in which such a substance to be alloyed with a lithium element is used, it is possible to particularly remarkably obtain the advantage of suppressing the occurrence of cracks in the negative electrode active material layer and increasing the initial coulombic efficiency of the non-aqueous electrolyte energy storage device. A lower limit of the total pore volume of the substance to be alloyed with a lithium element is preferably 0.005 cm$^3$/g, and may be 0.01 cm$^3$/g.

An upper limit of the average void ratio of the substance to be alloyed with a lithium element is, for example, preferably 30% or less, and more preferably less than 20%. In the case of substances to be alloyed with a lithium element, also when the average void ratio is small, the porosity is low and a change in the volume during charge and discharge tends to be large in general. Therefore, when the technique of the present invention is applied to a negative electrode for a non-aqueous electrolyte energy storage device in which such a substance to be alloyed with a lithium element is used, it is possible to particularly remarkably obtain the advantage of suppressing the occurrence of cracks in the negative electrode active material layer and increasing the initial coulombic efficiency of the non-aqueous electrolyte energy storage device. A lower limit of the average void ratio of the substance to be alloyed with a lithium element is preferably 1%, and may be 2%.

A lower limit of a content of the substance to be alloyed with a lithium element with respect to all of the negative electrode active materials in the negative electrode active material layer is preferably 50% by mass, more preferably 70% by mass, still more preferably 90% by mass, and yet still more preferably 95% by mass, 99% by mass, or 100% by mass. When the amount of the substance to be alloyed with a lithium element is set to be not less than the above-described lower limit, the energy density can be increased, for example. Meanwhile, in a case where the content of the substance to be alloyed with a lithium element is not less than the above-described lower limit, occurrence of cracks in the negative electrode active material layer due to a change in the volume of the substance to be alloyed with a lithium element and a decrease in the initial coulombic efficiency due to the cracks are likely to occur. Therefore, by applying the technique of the present invention to a negative electrode having a high content of the substance to be alloyed with a lithium element as described above, it is possible to particularly remarkably obtain the advantage of suppressing the occurrence of cracks in the negative electrode active material layer and increasing the initial coulombic efficiency. An upper limit of the content of the substance to be alloyed with a lithium element with respect to all of the negative electrode active materials in the negative electrode active material layer may be 100 % by mass.

The content of the substance to be alloyed with a lithium element in the negative electrode active material layer is preferably 10% by mass or more and 80% by mass or less, more preferably 20% by mass or more and 70% by mass or less, still more preferably 30% by mass or more and 60% by mass or less, and yet still more preferably 40% by mass or more and 50% by mass or less. When the content of the substance to be alloyed with a lithium element is set to be within the above range, the initial coulombic efficiency and other charge-discharge performance can be optimized in good balance. For example, when the content of the substance to be alloyed with a lithium element in the negative electrode active material layer is set to be not more than the above-described upper limit, a decrease in the discharge capacity at the time of a high-rate discharge can be suppressed. From the standpoint of suppressing a decrease in the discharge capacity at the time of a high-rate discharge, for example, the upper limit of the content of the substance to be alloyed with a lithium element in the negative electrode active material layer may be 45% by mass, 40% by mass, 35% by mass, or 30% by mass.

The negative electrode active material may further contain other negative electrode active materials besides the substance to be alloyed with a lithium element. Examples of the other negative electrode active materials include metallic lithium; titanium-containing oxides such as $Li_4Ti_5O_{12}$, $LiTiO_2$, and $TiNb_2O_7$; polyphosphate compounds; and carbon materials such as graphite and non-graphitic carbon (easily-graphitizable carbon or non-graphitizable carbon).

A content of the negative electrode active material in the negative electrode active material layer is preferably 10% by mass or more and 80% by mass or less, more preferably 20% by mass or more and 70% by mass or less, still more preferably 30% by mass or more and 60% by mass or less, and yet still more preferably 40% by mass or more and 50% by mass or less. When the content of the negative electrode active material is set to be within the above range, the initial coulombic efficiency and other charge-discharge performance can be optimized in good balance. For example, when the content of the negative electrode active material in the negative electrode active material layer is set to be not more than the above-described upper limit, a decrease in the discharge capacity at the time of a high-rate discharge can be suppressed. From the standpoint of suppressing a decrease in the discharge capacity at the time of a high-rate discharge, for example, the upper limit of the content of the negative electrode active material in the negative electrode active material layer may be 45% by mass, 40% by mass, 35% by mass, or 30% by mass.

The negative electrode active material and the solid electrolyte may form a composite. The composite may further contain other ingredients such as a conductive agent.

The solid electrolyte is not particularly limited, and a conventionally known solid electrolyte can be used. Examples of the solid electrolyte include a sulfide solid electrolyte, an oxide solid electrolyte, a dry polymer electrolyte, a gel polymer electrolyte, and a pseudo-solid electrolyte, in which a sulfide solid electrolyte is preferable. One or more kinds of the solid electrolytes can be used.

Examples of the sulfide solid electrolyte include $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-$Li_2O$, $Li_2S$-$P_2S_5$-$Li_2O$-LiI, $Li_2S$-$P_2S_5$-$Li_3N$, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, and $Li_2S$-$P_2S_5$-$Z_mS_n$ (where m and n are positive numbers and Z is any one of Ge, Zn, and Ga), $Li_2S-GeS_2$, $Li_2S-SiS_2-Li_3PO_4$, and $Li_2S-SiS_2-Li_xMO_y$ (where x and y are positive numbers and M is any one of P, Si, Ge, B, Al, Ga, and In), and $Li_{10}GeP_2S_{12}$.

The solid electrolyte may have a crystalline structure or may be amorphous. In one embodiment, the solid electrolyte may be a sulfide solid electrolyte having an argyrodite-type crystal structure.

A content of the solid electrolyte in the negative electrode active material layer is preferably 10% by mass or more and 90% by mass or less, more preferably 20% by mass or more and 80% by mass or less, more preferably 30% by mass or more and 70% by mass or less, still more preferably 40% by mass or more and 60% by mass or less, and yet still more preferably 45% by mass or more and 55% by mass or less. When the content of the solid electrolyte is set to be within the above range, the initial coulombic efficiency and other charge-discharge performance can be optimized in good balance. A lower limit of the content of the solid electrolyte in the negative electrode active material layer may be 50% by mass, 60% by mass, or 70% by mass.

The conductive agent has conductivity. The conductive agent includes a single-wall carbon nanotube (SWCNT). SWCNTs are carbon nanotubes formed by a single layer of graphene. The SWCNTs are considered to have not only the function as a conductive agent in the negative electrode active material layer, but also the function of increasing the mechanical strength of the negative electrode active material layer. The SWCNTs have higher flexibility than multi-wall carbon nanotubes (MWCNTs) or the like formed by multiple layers of graphene. Thus, it is considered that the SWCNT can be present in the negative electrode active material layer in such a form as to follow the form of the negative electrode active material and the like, and the mechanical strength of the negative electrode active material layer can be effectively increased.

The structure of the SWCNTs is not particularly limited, and may be any one of a chiral (helical) type, a zigzag type, or an armchair type. The SWCNTs may contain catalytic metal elements (for example, Fe, Co, and platinum group elements (Ru, Rh, Pd, Os, Ir, and Pt)) used in the synthesis of the SWCNTs.

An average diameter of the SWCNT may be, for example, 0.3 nm or more and 5 nm or less, 0.5 nm or more and 4 nm or less, or 1 nm or more and 3 nm or less. An average length of the SWCNT may be, for example, 0.1 $\mu$m or more and 500 $\mu$m or less, may be 1 $\mu$m or more and 200 $\mu$m or less, and may be 3 $\mu$m or more and 100 $\mu$m or less.

An average aspect ratio (ratio of the average length to the average diameter) of the SWCNT is, for example, 10 or more. A lower limit of the average aspect ratio of the SWCNT is preferably 20, 50, 100, 500 or 1,000. An upper limit of the average aspect ratio of the SWCNT may be, for example, 100,000, 50,000, 20,000, or 10,000. By using the SWCNT having a relatively high average aspect ratio, the mechanical strength of the negative electrode active material layer tends to be further increased.

It is assumed that the average diameter, the average length, and the average aspect ratio of the SWCNT are the average values of values measured from ten arbitrary SWCNTs observed by the SEM or TEM. In calculating the average aspect ratio, it is preferable that the ten SWCNTs for obtaining the average diameter and the ten SWCNTs for obtaining the average length should be the same SWCNTs. However, instead of using the same SWCNTs, each of ten different SWCNTs may be used to obtain the average diameter and the average length, and the ratio between those two averages may be assumed as the average aspect ratio. In other words, the average aspect ratio is either the average value of the aspect ratios of ten arbitrary SWCNTs observed by the SEM or TEM or the ratio of the average length of ten arbitrary SWCNTs to the average diameter of another ten different arbitrary SWCNTs that are observed by the SEM or TEM.

A BET specific surface area of the SWCNT is preferably 400 $m^2$/g or more and 3000 $m^2$/g or less, more preferably 600 $m^2$/g or more and 2000 $m^2$/g or less, and still more preferably 800 $m^2$/g or more and 1500 $m^2$/g or less.

The SWCNTs can be obtained by, for example, a known method such as a plasma arc discharge method, a laser ablation method, or a vapor-phase growth method. As the SWCNTs, commercially available products can be used.

In regard to the SWCNT, in a spectrum (Raman spectrum) obtained by Raman spectroscopy using an excitation laser having the wavelength of 532 nm, a peak specific to the SWCNT called the radial breathing mode (RBM) is observed at 200 $cm^{-1}$ or in the vicinity thereof (for example, 200 $cm^{-1} \pm 100$ $cm^{-1}$). It is known that this peak corresponds to expansion and contraction of the SWCNT in a diametrical direction, and the peak position depends on the diameter of the SWCNT. This peak is not observed in carbon materials other than the SWCNTs such as the MWCNTs. In other words, the negative electrode according to an embodiment of the present invention contains, in the negative electrode active material layer, a carbon material for which a peak is observed at 200 $cm^{-1} \pm 100$ $cm^{-1}$ in the Raman spectrum obtained by using the excitation laser having the wavelength of 532 nm. A content of the carbon element in the carbon material is, for example, 70% by mass or more, preferably 90% by mass or more, and more preferably 95% by mass or more.

A lower limit of the content of the SWCNT in the negative electrode active material layer is preferably 0.1% by mass, more preferably 0.3% by mass, still more preferably 0.5% by mass, and may be 0.7% by mass or 1.0% by mass. When the content of the SWCNT is set to be not less than the above-described lower limit, the mechanical strength of the negative electrode active material layer can be further increased, and the initial coulombic efficiency of the non-aqueous electrolyte energy storage device can be further increased. An upper limit of the content of the SWCNT in the negative electrode active material layer is preferably 3% by mass, more preferably 2% by mass, and may be 1.5% by mass, 1.0% by mass, or 0.7% by mass. When the content of the SWCNT is set to be not more than the above-described upper limit, the content of the negative electrode active material can be relatively increased, and as a result, the energy density can be increased, for example.

The conductive agent may contain other conductive agents besides the SWCNT. Examples of the other conductive agents include carbon materials other than the SWCNTs, metals, and conductive ceramic. Examples of the carbon materials other than the SWCNTs include graphite, non-graphitic carbon, and graphene-based carbon other than the SWCNTs. Examples of the non-graphitic carbon include carbon nanofibers, pitch-based carbon fibers, and carbon black. Examples of the carbon black include furnace black, acetylene black, and Ketjen black. Examples of the graphene-based carbon other than the SWCNTs include graphene, MWCNTs, and fullerene. Examples of the shape of the conductive agent other than the SWCNT include a powdery form and a fibrous form. As the other conductive agents, a fibrous conductive agent other than the SWCNT is preferable, and a fibrous carbon material (fibrous carbon) other than the SWCNT is more preferable. Examples of the fibrous carbon other than the SWCNT include carbon nanofibers, pitch-based carbon fibers, and MWCNTs.

In one embodiment of the present invention, a lower limit of the content of the fibrous conductive agent in the conductive agent (i.e., a total content of the SWCNT and the fibrous conductive agent other than the SWCNT) is preferably 90% by mass, more preferably 95% by mass, and still more preferably 99% by mass. By mainly using the fibrous conductive agent as the conductive agent in this way, the mechanical strength of the negative electrode active material layer is further increased, for example, whereby the initial coulombic efficiency of the non-aqueous electrolyte energy storage device can be increased, for example. An upper limit of the content of the fibrous conductive agent in the conductive agent may be 100% by mass.

In one embodiment of the present invention, the conductive agent may be composed of a fibrous conductive agent containing the SWCNT, or may be composed of fibrous carbon containing the SWCNT.

In one embodiment of the present invention, it is preferable that the conductive agent should further contain at least one kind of conductive agent selected from the group consisting of a fibrous conductive agent, which has an average diameter of 120 nm or more, and a particulate conductive agent, in addition to the SWCNT. In the above case, it is possible to suppress a decrease in the discharge capacity after execution of a high-rate discharge. An upper limit of the average diameter of the fibrous conductive agent is preferably 400 nm, and more preferably 300 nm. Also, the fibrous conductive agent is preferably fibrous carbon. A BET specific surface area of the fibrous conductive agent is preferably 5 m$^2$/g or more and 40 m$^2$/g or less, more preferably 10 m$^2$/g or more and 20 m$^2$/g or less.

The particulate conductive agent is preferably carbon black, and more preferably acetylene black. The average particle size of the particulate conductive agent is preferably 10 nm or more and 100 nm or less, and more preferably 20 nm or more and 50 nm or less. A BET specific surface area of the particulate conductive agent is preferably 10 m$^2$/g or more and 150 m$^2$/g or less, more preferably 30 m$^2$/g or more and 100 m$^2$/g or less.

When the negative electrode active material layer further contains at least one kind of conductive agent selected from the group consisting of a fibrous conductive agent, which has an average diameter of 120 nm or more, and a particulate conductive agent, a total content of the fibrous conductive agent having the average diameter of 120 nm or more and the particulate conductive agent in the negative electrode active material layer is preferably 0.5% by mass or more and 5% by mass or less, and more preferably 1% by mass or more and 3% by mass or less. Further, the mass ratio of the total content of the fibrous conductive agent having the average diameter of 120 nm or more and the particulate conductive agent to the content of the SWCNT is preferably 2 times or more and 10 times or less, more preferably 3 times or more and 8 times or less, and still more preferably 4 times or more and 6 times or less. When at least one kind of conductive agent selected from the group consisting of a fibrous conductive agent, which has an average diameter of 120 nm or more, and a particulate conductive agent is contained at such a content, it is possible to further suppress a decrease in the discharge capacity after execution of a high-rate discharge.

In one embodiment of the present invention, the lower limit of the content of the SWCNT in the conductive agent is preferably 50% by mass, more preferably 70% by mass, still more preferably 90% by mass, and may be 95% by mass, 98% by mass or 99% by mass. The SWCNT alone may be used as the conductive agent. Also in this case, it is possible to suppress a decrease in the discharge capacity after execution of a high-rate discharge.

A lower limit of the content of the conductive agent in the negative electrode active material layer is preferably 0.1% by mass, more preferably 0.3% by mass, still more preferably 0.5% by mass, and may be 0.7% by mass or 1.0% by mass. An upper limit of the content of the conductive agent in the negative electrode active material layer is preferably 6% by mass, more preferably 4% by mass, and may be 3% by mass, 2.5% by mass, or 2.0% by mass. When the content of the conductive agent is set to be within the above range, the initial coulombic efficiency and other charge-discharge performance of the non-aqueous electrolyte energy storage device can be optimized in good balance.

Examples of the binder include thermoplastic resins such as fluororesins (e.g. polytetrafluoroethylene (PTFE) and polyvinylidene fluoride (PVDF)), polyethylene, polypropylene, polyacrylate, and polyimide; elastomers such as ethylene-propylene-diene rubber (EPDM), sulfonated EPDM, styrene-butadiene rubber (SBR), and fluororubber; and polysaccharide polymers. Among the above, elastomers are preferable, and SBR, in particular, is preferable.

A content of the binder in the negative electrode active material layer is preferably 0.5% by mass or more and 10% by mass or less, more preferably 1% by mass or more and 6% by mass or less, and still more preferably 2% by mass or more and 4% by mass or less. When the content of the binder is set to be within the above range, the negative electrode active material can be stably held, for example.

Examples of the thickener include polysaccharide polymers such as carboxymethyl cellulose (CMC) and methyl cellulose. When the thickener has a functional group that reacts with lithium or the like, this functional group may be deactivated in advance by methylation or the like. In one embodiment of the present invention, a content of the thickener in the negative electrode active material layer may be 1% by mass or less or may be 0.1% by mass or less, and substantially no thickener may be contained.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica or synthetic substances thereof. In one embodiment of the present invention, a content of the filler in the negative electrode active material layer may be 1% by mass or less or may be 0.1% by mass or less, and substantially no filler may be contained.

The negative electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as the constituents other than the negative electrode active material, the solid electrolyte, the conductive agent, the binder, the thickener, and the filler.

An average thickness of the negative electrode active material layer is preferably 30 $\mu$m or more and 1,000 $\mu$m or less, and more preferably 60 $\mu$m or more and 500 $\mu$m or less. When the average thickness of the negative electrode active material layer is set to be not less than the above-described lower limit, a non-aqueous electrolyte energy storage device having a high energy density can be obtained. When the average thickness of the negative electrode active material layer is set to be not more than the above-described upper limit, downsizing of the non-aqueous electrolyte energy storage device can be achieved, for example.

<Non-aqueous Electrolyte Energy Storage Device>

A non-aqueous electrolyte energy storage device according to an embodiment of the present invention includes a positive electrode, a negative electrode, and a separation layer interposed between the positive electrode and the negative electrode. In the non-aqueous electrolyte energy storage device, a stacked body formed of the positive electrode, the negative electrode, and the separation layer is usually accommodated in a container. The non-aqueous electrolyte energy storage device may be a non-aqueous electrolyte secondary battery, an all-solid-state energy storage device, or an all-solid-state secondary battery. As an example of the non-aqueous electrolyte energy storage device, an all-solid-state secondary battery will be specifically described.

(Positive Electrode)

The positive electrode includes a positive electrode substrate and a positive electrode active material layer which is disposed on the positive electrode substrate directly or via an intermediate layer. A configuration of the intermediate layer is not particularly limited, and can be selected from the configurations exemplified for the negative electrode, for example.

The positive electrode substrate has conductivity. As the material of the positive electrode substrate, a metal such as aluminum, titanium, tantalum, or stainless steel, or an alloy thereof is used. Among the above, aluminum or an aluminum alloy is preferable from the standpoint of potential resistance, high conductivity, and cost. Examples of the positive electrode substrate include a foil, a vapor-deposited film, a mesh, and a porous material, and a foil is preferable from the standpoint of cost. Therefore, an aluminum foil or an aluminum alloy foil should preferably be used for the positive electrode substrate. As the aluminum or aluminum alloy, A1085, A3003, and A1N30, for example, specified in JIS H 4000:2014 or JIS H 4160:2006 are exemplified.

An average thickness of the positive electrode substrate is preferably 3 $\mu$m or more and 50 $\mu$m or less, more preferably 5 $\mu$m or more and 40 $\mu$m or less, still more preferably 8 $\mu$m or more and 30 $\mu$m or less, and particularly preferably 10 $\mu$m or more and 25 $\mu$m or less. When the average thickness of the positive electrode substrate is set to be within the above range, an energy density per volume of the non-aqueous electrolyte energy storage device can be increased while increasing the strength of the positive electrode substrate.

The positive electrode active material layer contains a positive electrode active material. The positive electrode active material layer contains, as necessary, optional ingredients such as a solid electrolyte, a conductive agent, a binder, a thickener, and a filler. The optional ingredients such as the solid electrolyte, the conductive agent, the binder, the thickener, and the filler can be selected from the materials exemplified for the negative electrode active material layer. The conductive agent in the positive electrode active material layer may or may not contain the SWNCT.

The positive electrode active material can be selected as appropriate from known positive electrode active materials. As the positive electrode active material, a material capable of occluding and releasing lithium ions is usually used. Examples of the positive electrode active material include lithium-transition metal composite oxides having an $\alpha$-$NaFeO_2$-type crystal structure, lithium-transition metal composite oxides having a spinel-type crystal structure, polyanion compounds, chalcogen compounds, and sulfur. Examples of the lithium-transition metal composite oxides having the $\alpha$-$NaFeO_2$-type crystal structure include $Li[Li_xNi_{(1-x)}]O_2$ ($0 \leq x < 0.5$), $Li[Li_xNi_\gamma Co_{(1-x-\gamma)}]O_2$ ($0 \leq x < 0.5$, $0 < \gamma < 1$, $0 < 1-x-\gamma$), $Li[Li_xCo_{(1-x)}]O_2$ ($0 \leq x < 0.5$), $Li[Li_xNi_\gamma Mn_{(1-x-\gamma)}]O_2$ ($0 \leq x < 0.5$, $0 < \gamma < 1$, $0 < 1-x-\gamma$), $Li[Li_xNi_\gamma Mn_\beta Co_{(1-x-\gamma-\beta)}]O_2$ ($0 \leq x < 0.5$, $0 < \gamma$, $0 < \beta$, $0.5 < \gamma+\beta < 1$, $0 < 1-x-\gamma-\beta$), and $Li[Li_xNi_\gamma Co_\beta Al_{(1-x-\gamma-\beta)}]O_2$ ($0 \leq x < 0.5$, $0 < \gamma$, $0 < \beta$, $0.5 < \gamma+\beta < 1$, $0 < 1-x-\gamma-\beta$). Examples of the lithium-transition metal composite oxides having the spinel-type crystal structure include $Li_xMn_2O_4$ and $Li_xNi_\gamma Mn_{(2-\gamma)}O_4$. Examples of the polyanion compounds include $LiFePO_4$, $LiMnPO_4$, $LiNiPO_4$, $LiCoPO_4$, $Li_3V_2(PO_4)_3$, $Li_2MnSiO_4$, and $Li_2CoPO_4F$. Examples of the chalcogen compounds include titanium disulfide, molybdenum disulfide, and molybdenum dioxide. Atoms or polyanions in these materials may be partially substituted with atoms or anion species of other elements. Surfaces of these materials may be coated with other materials. In the positive electrode active material layer, one type of these materials may be used alone, or two or more types may be mixed and used.

The positive electrode active material is preferably a lithium-transition metal composite oxide, more preferably a lithium-transition metal composite oxide containing at least one kind of element among a nickel element, a cobalt element, and a manganese element, still more preferably a lithium-transition metal composite oxide containing at least two kinds of elements among the nickel element, the cobalt element, and the manganese element, and yet still more preferably a lithium-transition metal composite oxide containing the nickel element, the cobalt element, and the manganese element. The lithium-transition metal composite oxide should preferably have an $\alpha$-$NaFeO_2$-type crystal structure. By the use of such a lithium-transition metal composite oxide, the energy density can be increased, for example.

The positive electrode active material is usually in the form of particles (powder). An average particle size of the positive electrode active material should preferably be, for example, 0.1 $\mu$m or more and 20 $\mu$m or less. When the average particle size of the positive electrode active material is set to be not less than the above-described lower limit, the positive electrode active material is easily manufactured or handled. When the average particle size of the positive electrode active material is set to be not more than the above-described upper limit, electron conductivity of the positive electrode active material layer is improved. When a composite of a positive electrode active material and another material is used, the average particle size of the composite is assumed as the average particle size of the positive electrode active material.

A content of the positive electrode active material in the positive electrode active material layer is preferably 50% by mass or more and 95% by mass or less, more preferably 60% by mass or more and 90% by mass or less, and still more preferably 70% by mass or more and 85% by mass or less. When the content of the positive electrode active material is set to be within the above range, both high energy density and manufacturability of the positive electrode active material layer can be achieved.

A content of the solid electrolyte in the positive electrode active material layer is preferably 5% by mass or more and 50% by mass or less, more preferably 10% by mass or more and 40% by mass or less, and still more preferably 15% by mass or more and 30% by mass or less. When the content of the solid electrolyte is set to be within the above range, the energy density of the non-aqueous electrolyte energy storage device can be increased, for example.

The positive electrode active material and the solid electrolyte may form a composite. The composite may further contain other ingredients such as a conductive agent.

A content of the conductive agent in the positive electrode active material layer is preferably 0.5% by mass or more and 10% by mass or less, more preferably 1% by mass or more and 6% by mass or less, and may be 1.5% by mass or more and 4% by mass or less. When the content of the conductive agent is set to be within the above range, the energy density of the non-aqueous electrolyte energy storage device can be increased.

A content of the binder in the positive electrode active material layer is preferably 0.5% by mass or more and 10% by mass or less, more preferably 1% by mass or more and 6% by mass or less, and may be 1.5% by mass or more and 4% by mass or less. When the content of the binder is set to be within the above range, the positive electrode active material can be stably held.

A content of the thickener in the positive electrode active material layer may be 1% by mass or less or may be 0.1% by mass or less, and substantially no thickener may be contained.

A content of the filler in the positive electrode active material layer may be 1% by mass or less or may be 0.1% by mass or less, and substantially no filler may be contained.

The positive electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as the constituents other than the positive electrode active material, the solid electrolyte, the conductive agent, the binder, the thickener, and the filler.

An average thickness of the positive electrode active material layer is preferably 30 $\mu$m or more and 1,000 $\mu$m or less, and more preferably 60 $\mu$m or more and 500 $\mu$m or less. When the average thickness of the positive electrode active material layer is set to be not less than the above-described lower limit, a non-aqueous electrolyte energy storage device having a high energy density can be obtained. When the average thickness of the positive electrode active material layer is set to be not more than the above-described upper limit, downsizing of the non-aqueous electrolyte energy storage device can be achieved, for example.

(Negative Electrode)

In the non-aqueous electrolyte energy storage device according to an embodiment of the present invention, the above-described negative electrode for a non-aqueous electrolyte energy storage device according to one embodiment of the present invention is used as the negative electrode.

(Separation Layer)

The separation layer usually contains a solid electrolyte. A content of the solid electrolyte in the separation layer is preferably 70% by mass or more, more preferably 80% by mass or more, and may be 90% by mass or more.

The separation layer may contain optional ingredients such as an additive (for example, a phosphate compound such as $Li_3PO_4$, an oxide, or a halogen compound), a binder, a thickener, and a filler. The optional ingredients such as the binder, the thickener, and the filler can be selected from the materials exemplified for the negative electrode active material layer.

An average thickness of the separation layer is preferably 1 $\mu$m or more and 100 $\mu$m or less, more preferably 2 $\mu$m or more and 50 $\mu$m or less, and still more preferably 3$\mu$m or more and 20 $\mu$m or less. When the average thickness of the separation layer is set to be not less than the above-described lower limit, the positive electrode and the negative electrode can be insulated from each other with high reliability. When the average thickness of the separation layer is set to be not more than the above-described upper limit, the energy density of the non-aqueous electrolyte energy storage device can be increased.

(Container)

The container accommodates the positive electrode, the negative electrode, and the like in an internal space thereof. As the material of the container, a metal material such as aluminum or stainless steel, a resin material, or the like is used, and the metal material is preferable from the standpoint of strength and the like. A composite material of a metal material and a resin material, for example, can also be used.

The shape of the container is not particularly limited, and may be a cylindrical shape, a rectangular parallelepiped shape (prismatic shape), a disc shape, or the like. The container may take the form of a sheet or the like.

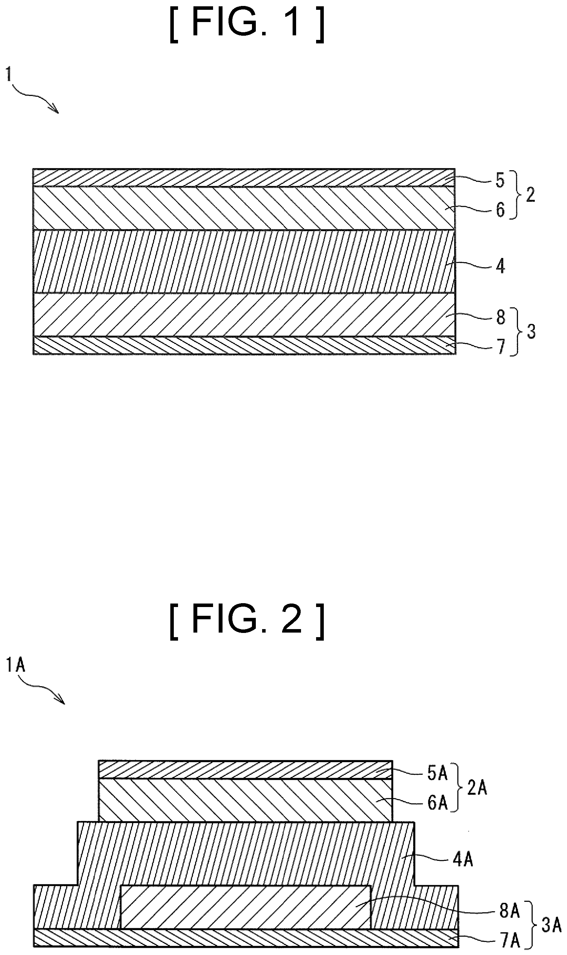

A non-aqueous electrolyte energy storage device 1 according to an embodiment of the present invention illustrated in FIG. 1 is an all-solid-state secondary battery, and a positive electrode 2 and a negative electrode 3 are disposed with a separation layer 4 interposed therebetween. The positive electrode 2 includes a positive electrode substrate 5 and a positive electrode active material layer 6, and the positive electrode substrate 5 serves as an outermost layer of the positive electrode 2. The negative electrode 3 includes a negative electrode substrate 7 and a negative electrode active material layer 8, and the negative electrode substrate 7 serves as an outermost layer of the negative electrode 2. In the non-aqueous electrolyte energy storage device 1 illustrated in FIG. 1, the negative electrode active material layer 8, the separation layer 4, the positive electrode active material layer 6, and the positive electrode substrate 5 are stacked in this order on the negative electrode substrate 7. An intermediate layer may be provided between the positive electrode substrate 5 and the positive electrode active material layer 6. Similarly, an intermediate layer may be provided between the negative electrode substrate 7 and the negative electrode active material layer 8. The non-aqueous electrolyte energy storage device according to an embodiment of the present invention may further include other members such as a container. Other members such as the container are omitted in the non-aqueous electrolyte energy storage device 1 illustrated in FIG. 1.

The non-aqueous electrolyte energy storage device according to an embodiment of the present invention may further include, for example, a positive electrode lead, a positive electrode external terminal, a negative electrode lead, and a negative electrode external terminal. The positive electrode lead and the negative electrode lead are accommodated in the container. The positive electrode external terminal and the negative electrode external terminal are provided outside the container. The positive electrode is electrically connected to the positive electrode external terminal via the positive electrode lead. The negative electrode is electrically connected to the negative electrode external terminal via the negative electrode lead.

As a form different from the non-aqueous electrolyte energy storage device 1 illustrated in FIG. 1, FIG. 2 illustrates a non-aqueous electrolyte energy storage device 1A. Similarly to the non-aqueous electrolyte energy storage device 1, the non-aqueous electrolyte energy storage device 1A is an all-solid-state secondary battery in which a positive electrode 2A and a negative electrode 3A are disposed with a separation layer 4A interposed therebetween. The positive electrode 2A includes a positive electrode substrate 5A and a positive electrode active material layer 6A, and the positive electrode substrate 5A serves as an outermost layer of the positive electrode 2A. The negative electrode 3A includes a negative electrode substrate 7A and a negative electrode active material layer 8A, and the negative electrode substrate 7A serves as an outermost layer of the negative electrode 2A. In the non-aqueous electrolyte energy storage device 1A, the separation layer 4A is also disposed on a side surface of the negative electrode active material layer 8A. In the present embodiment, the separation layer 4A is stacked so as to be in contact with the negative electrode substrate 7A and the negative electrode active material layer 8A. The negative electrode active material layer 8A has such a structure that the outer surface thereof is entirely covered with other members (the negative electrode substrate 7A and the separation layer 4A). The side surface of the negative electrode active material layer may be covered with an electrically insulating member other than the separation layer. In the non-aqueous electrolyte energy storage device 1A having such a structure, the mechanical strength of the negative electrode active material layer 8A is further increased. Consequently, occurrence of cracks in the negative electrode active material layer is further suppressed, and the initial coulombic efficiency of the non-aqueous electrolyte energy storage device can be further increased.

<Energy Storage Apparatus>

The non-aqueous electrolyte energy storage device of the present embodiment can be mounted as an energy storage unit (battery module) configured by assembling a plurality of non-aqueous electrolyte energy storage devices in power sources for automobiles such as electric vehicles (EVs), hybrid electric vehicles (HEVs), or plug-in hybrid electric vehicles (PHEVs), power sources for electronic devices such as personal computers or communication terminals, power sources for power storage, or the like. In this case, it is sufficient if the technique of the present invention is applied to at least one non-aqueous electrolyte energy storage device included in the energy storage unit.

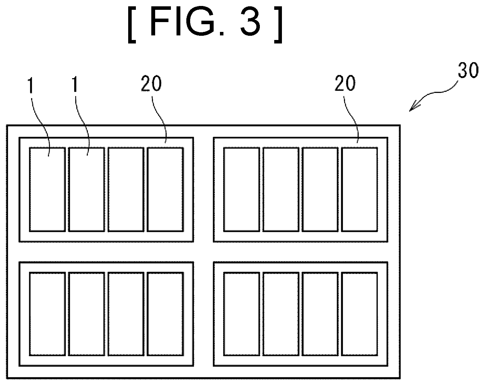

An energy storage apparatus 30 of FIG. 3 includes a plurality of energy storage units 20. Each of the energy storage units 20 includes a plurality of non-aqueous electrolyte energy storage devices 1 electrically connected to each other. The energy storage apparatus 30 may include a bus bar (not illustrated) that electrically connects the plurality of non-aqueous electrolyte energy storage devices 1, a bus bar (not illustrated) that electrically connects the plurality of energy storage units 20, and the like. The energy storage unit 20 or the energy storage apparatus 30 may include a state monitoring apparatus (not illustrated) which monitors the state of one or more non-aqueous electrolyte energy storage devices 1.

<Method for Manufacturing Non-aqueous Electrolyte Energy Storage Device>

A non-aqueous electrolyte energy storage device according to an embodiment of the present invention can be manufactured by a known method. The method for manufacturing a non-aqueous electrolyte energy storage device includes, for example, preparing a positive electrode mixture, preparing a material for separation layer, preparing a negative electrode mixture, and stacking a positive electrode, a separation layer, and a negative electrode.

Preparing the positive electrode mixture may be production of the positive electrode mixture. A method for preparing the positive electrode mixture is not particularly limited and may be selected as appropriate according to the purpose. For example, the positive electrode mixture can be prepared by mixing a positive electrode active material, a solid electrolyte, and the like, by using a mechanical milling method, etc. The positive electrode mixture may be in the form of a paste containing a dispersion medium.

Preparing the material for separation layer may be production of the material for separation layer. A solid electrolyte as the material for separation layer can be produced by a conventionally known method. For example, the solid electrolyte can be obtained by processing a predetermined material by a mechanical milling method. The material for separation layer may be produced by a melting and quenching method whereby predetermined materials are heated to a melting temperature or higher and the two are melted and mixed at a predetermined ratio, and then quenched. Examples of other methods for producing the material for separation layer include a solid phase method of enclosing a predetermined material under a reduced pressure and sintering the material, a liquid phase method such as dissolution and precipitation, a gas phase method (PLD), and a method of processing a predetermined material by a mechanical milling method and thereafter sintering the material in an argon atmosphere. The material for separation layer may be in the form of a paste containing a dispersion medium.

Preparing the negative electrode mixture may be production of the negative electrode mixture. A method for preparing the negative electrode mixture is not particularly limited and may be selected as appropriate according to the purpose. For example, the negative electrode mixture can be prepared by mixing a negative electrode active material, a solid electrolyte, a conductive agent, and the like, by using a mechanical milling method, etc. The negative electrode mixture may be in the form of a paste containing a dispersion medium. From the standpoint of enhancing dispersibility of the SWCNTs, a negative electrode mixture in the form of a paste containing a dispersion medium should preferably be used.

In stacking the positive electrode, the separation layer, and the negative electrode, the positive electrode including the positive electrode substrate and the positive electrode active material layer, the separation layer, and the negative electrode including the negative electrode substrate and the negative electrode active material layer are stacked, for example. In the present step, the positive electrode, the separation layer, and the negative electrode may be sequentially formed in this order or vice versa, and the order of forming the respective layers is not particularly specified. The positive electrode is formed by, for example, pressure molding the positive electrode substrate and the positive electrode mixture, the separation layer is formed by pressure molding the material for separation layer, and the negative electrode is formed by pressure molding the negative electrode substrate and the negative electrode mixture. By pressure molding the positive electrode substrate, the positive electrode mixture, the separation layer material, the negative electrode mixture, and the negative electrode substrate at once, the positive electrode, the separation layer, and the negative electrode may be stacked. Each of the positive electrode and the negative electrode may be formed in advance and then pressure molded with the separation layer to form a stack.

The positive electrode active material layer, the negative electrode active material layer, and the separation layer may be provided by way of coating. For example, the positive electrode active material layer can be provided by applying, as a coating, a paste-like positive electrode mixture to a surface of the positive electrode substrate and drying the mixture. Similarly, the negative electrode active material layer can be provided by applying, as a coating, a paste-like negative electrode mixture to a surface of the negative electrode substrate and drying the mixture. The separation layer can be provided by applying, as a coating, a paste-like material for separation layer to the surface of the positive electrode active material layer or the negative electrode active material layer and drying the material. After that, for example, a stacked body (positive electrode) formed of the positive electrode substrate and the positive electrode active material layer and a stacked body formed of the negative electrode substrate, the negative electrode active material layer, and the separation layer (i.e., a stacked body formed of the negative electrode and the separation layer) are disposed such that the positive electrode active material layer and the negative electrode active material layer are opposed to each other via the separation layer, and then hot press is performed. In this way, a non-aqueous electrolyte energy storage device is obtained. A non-aqueous electrolyte energy storage device may alternatively be obtained by arranging a stacked body formed of a positive electrode substrate, a positive electrode active material layer, and a separation layer (i.e., a stacked body formed of a positive electrode and the separation layer) and a stacked body formed of a negative electrode and a separation layer in such a way that the positive electrode active material layer and a negative electrode active material layer are opposed to each other via the separation layer.

In stacking each layer, coating and pressure molding may be combined. The stacking of each layer may be performed by, for example, providing a layer on another substrate material by coating or the like, and transferring this layer.

<Other Embodiments>

The negative electrode for a non-aqueous electrolyte energy storage device and the non-aqueous electrolyte energy storage device of the present invention are not limited to the above-described embodiment, and various alterations may be made within a range that does not depart from the gist of the present invention. For example, in a configuration of one embodiment, a configuration of another embodiment may be added, or a part of the configuration of the one embodiment may be replaced with the configuration of the other embodiment or with a well-known technique. Further, a part of the configuration of the one embodiment may be deleted. Furthermore, a well-known technique may be added to the configuration of the one embodiment.

For example, the non-aqueous electrolyte energy storage device according to the present invention may include other layers apart from the positive electrode, the separation layer, and the negative electrode. The non-aqueous electrolyte energy storage device according to the present invention may contain a liquid. Such a non-aqueous electrolyte energy storage device includes, for example, a non-aqueous electrolyte energy storage device in which a non-aqueous electrolytic solution is filled in the voids of the positive electrode active material layer 6, the separation layer 4, the negative electrode active material layer 8, and the like, in the non-aqueous electrolyte energy storage device 1 described above. The non-aqueous electrolyte energy storage device according to the present invention may be a capacitor or the like, apart from the secondary battery.

<EXAMPLES>

The present invention will be more specifically described with reference to Examples, but the present invention is not limited to the Examples described below.

[Example 1]

On a surface of an aluminum foil in the size of 2.5 cm × 2.5 cm, which is a positive electrode substrate, a positive electrode active material layer having a square shape in a plan view, in the size of 2.0 cm × 2.0 cm, was stacked, thereby obtaining a positive electrode. The positive electrode active material layer was formed from a paste-like positive electrode mixture containing $LiNi_{3/5}Co_{1/5}Mn_{1/5}O_2$ as a positive electrode active material, an argyrodite-type sulfide solid electrolyte, fibrous carbon ("VGCF" (Registered trademark)) manufactured by Showa Denko Materials Co., Ltd.) as a conductive agent, styrene-butadiene rubber (SBR) as a binder, and butyl butyrate as a dispersion medium. A mass ratio of the positive electrode active material, the solid electrolyte, the conductive agent, and the binder was 76:20:2:2 in terms of solid content. Next, an argyrodite-type sulfide solid electrolyte was stacked, as a separation layer, on a surface of the positive electrode active material layer to obtain a first stacked body (i.e., a stacked body formed of the positive electrode and the separation layer).

As a negative electrode active material, a non-porous simple substance of silicon (Si) having the average particle size of 3.0 μm, the BET specific surface area of 3.5 m²/g, the total pore volume of 0.015 cm³/g, the average pore size of 9.7 nm, and the average void ratio of 3.5% was prepared.

A paste-like negative electrode mixture was prepared by mixing the above-mentioned simple substance of silicon (Si) as the negative electrode active material, an argyrodite-type sulfide solid electrolyte (SE), an SWCNT (average diameter of 1.6 nm and average length of greater than 5 μm) and fibrous carbon ("VGCF" (Registered trademark)) manufactured by Showa Denko Materials Co., Ltd.), which is not an SWCNT, as conductive agents, and SBR as a binder, and adding butyl butyrate as a dispersion medium thereto. A mass ratio of the negative electrode active material (Si), the solid electrolyte (SE), the SWCNT, the VGCF, and the binder (SBR) was 44.0:50.0:0.5:2.5:3.0 in terms of solid content. By applying, as a coating, the paste-like negative electrode mixture to cover the entire surface of a copper foil in the size of 2.1 cm × 2.1 cm, which is a negative electrode substrate, and dying the paste-like negative electrode mixture, a negative electrode active material layer was formed and a second stacked body (a negative electrode) was obtained.

By making the first stacked body and the second stacked body overlap one another in such a way that the positive electrode active material layer and the negative electrode active material layer are opposed to each other with the separation layer interposed therebetween, and performing hot press, a non-aqueous electrolyte energy storage device of Example 1 was obtained.

The non-aqueous electrolyte energy storage device was produced in an argon atmosphere having a dew point of less than or equal to -50 °C.

[Examples 2 to 5 and Comparative Examples 1 to 5]

Non-aqueous electrolyte energy storage devices of Examples 2 to 5 and Comparative Examples 1 to 5 were obtained in the same manner as in Example 1 except that the composition of the negative electrode active material layer (negative electrode mixture) was changed to those indicated in Table 1.

In Table 1, Gr represents graphite, MWCNT (a) represents an MWCNT having the average diameter of approximately 7 to 15 nm and the average length of approximately 5 to 15 μm, and MWCNT (b) represents an MWCNT having the average diameter of approximately 60 to 100 nm and the average length of more than 5 μm, respectively. Also, in Example 5 and Comparative Examples 2 and 3, a non-porous simple substance of silicon (Si) having the average particle size of 0.8 μm, the BET specific surface area of 26.6 m²/g, the total pore volume of 0. 079 cm³/g, the average pore size of 6.2 nm, and the average void ratio of 18.5% was used as the negative electrode active material.

[Initial Charge and Discharge]

For each of the obtained non-aqueous electrolyte energy storage devices, initial charge and discharge was performed at 25 °C in the following manner. A constant current-constant voltage charge was performed at a current of 0.1 C with a charge cutoff voltage being set to 4.25 V. A condition for terminating the charge was set to the point when a current was decreased to 0.025 C. After that, a rest period of 10 minutes was provided. After that, a constant current discharge was performed at a current of 0.1 C with a discharge cutoff voltage being set to 2.50 V. In the above, 1 C was 24 mA. A percentage of the discharge capacity to the initial charge capacity was obtained as the initial coulombic efficiency. Table 1 shows the results.

[Table 1]

| | Negative electrode active material layer | | | | | | | | Evaluation |
| --- | --- | --- | --- | --- | --- | --- | --- | --- | --- |
| | Si | | SE | Conductive agent | | | | Binder | Initial coulombic efficiency |
| | | | | SWCNT | Other conductive agent | | Total | | |
| | Content (mass %) | Average particle size ($\mu$m) | Content (mass %) | Content (mass %) | Type | Content (mass %) | Content (mass %) | Content (mass %) | (%) |
| Example 1 | 44.0 | 3.0 | 50.0 | 0.5 | VGCF | 2.5 | 3.0 | 3.0 | 86 |
| Example 2 | 44.0 | 3.0 | 50.0 | 1.0 | VGCF | 2.0 | 3.0 | 3.0 | 86 |
| Example 3 | 44.0 | 3.0 | 52.0 | 1.0 | - | 0.0 | 1.0 | 3.0 | 82 |
| Example 4 | 44.0 | 3.0 | 51.0 | 2.0 | - | 0.0 | 2.0 | 3.0 | 85 |
| Example 5 | 44.0 | 0.8 | 50.0 | 0.5 | VGCF | 2.5 | 3.0 | 3.0 | 85 |
| Comparative Example 1 | 44.0 | 3.0 | 50.0 | 0.0 | VGCF | 3.0 | 3.0 | 3.0 | 69 |
| Comparative Example 2 | 44.0 | 0.8 | 50.0 | 0.0 | VGCF | 3.0 | 3.0 | 3.0 | 78 |
| Comparative Example 3 | 44.0 | 0.8 | 47.0 | 0.0 | VGCF/Gr | 3.0/3.0 | 6.0 | 3.0 | 75 |
| Comparative Example 4 | 44.0 | 3.0 | 52.0 | 0.0 | MWCNT (a) | 1.0 | 1.0 | 3.0 | 72 |
| Comparative Example 5 | 44.0 | 3.0 | 52.0 | 0.0 | MWCNT (b) | 1.0 | 1.0 | 3.0 | 71 |

As shown in Table 1, the initial coulombic efficiency of each of the non-aqueous electrolyte energy storage devices of Comparative Examples 1 to 5 including the negative electrode in which no SWCNT was contained in the negative electrode active material layer was not greater than 80%. In contrast, in each of the non-aqueous electrolyte energy storage devices of Examples 1 to 5 including the negative electrode in which the SWCNT was contained in the negative electrode active material layer, the initial coulombic efficiency exceeded 80%, and the initial coulombic efficiency was high.

From the comparison between Example 1 and Comparative Example 1 in which the simple substance of silicon (Si) having the average particle size of 3.0 $\mu$m was used as the negative electrode active material, and the comparison between Example 5 and

Comparative Example 2 in which Si having the average particle size of 0.8 $\mu$m was used as the negative electrode active material, for example, it can be confirmed that the effect of the initial coulombic efficiency improvement by the use of the SWCNT is large when a simple substance of silicon (Si), which is a substance to be alloyed with a lithium element, having a relatively large average particle size is being used as the negative electrode active material.

[Examples 6 to 16]

Non-aqueous electrolyte energy storage devices of Examples 6 to 16 were obtained in the same manner as in Example 1 except that $LiNi_{0.80}Co_{0.15}Al_{0.05}O_2$ was used as the positive electrode active material and the composition of the negative electrode active material layer (negative electrode mixture) was changed to those indicated in Tables 2 to 4.

[Initial Charge and Discharge]

For each of the obtained non-aqueous electrolyte energy storage devices of Examples 6 to 16, initial charge and discharge was performed at 25 °C in the following manner. A constant current-constant voltage charge was performed at a current of 0.1 C with a charge cutoff voltage being set to 4.25 V. A condition for terminating the charge was set to the point when a current was decreased to 0.025 C. After that, a rest period of 10 minutes was provided. After that, a constant current discharge was performed at a current of 0.1 C with a discharge cutoff voltage being set to 2.50 V. In the above, 1 C was 24 mA.

[High-rate Discharge Test (Discharge Capacity Ratio (1.0 C/0.1 C))]

For each of the non-aqueous electrolyte energy storage devices of Examples 6 to 16 which have been subjected to the above-mentioned "initial charge and discharge", a high-rate discharge test was performed at 25 °C in the following manner. A constant current-constant voltage charge was performed at a current of 0.1 C with a charge cutoff voltage being set to 4.25 V. A condition for terminating the charge was set to the point when a current was decreased to 0.025 C. After that, a rest period of 10 minutes was provided. After that, a constant current discharge was performed at a current of 1.0 C with a discharge cutoff voltage being set to 2.50 V.

A percentage of the discharge capacity at a current of 1.0 C in the "high-rate discharge test" to the discharge capacity at a current of 0.1 C in the above-mentioned "initial charge and discharge" was obtained as a discharge capacity ratio (1.0 C/0.1 C)). Tables 2 to 4 show the results.

(Charge and Discharge Cycle Test)

For each of the non-aqueous electrolyte energy storage devices of Examples 6 to 13 which have been subjected to the above-mentioned "high-rate discharge test", a charge and discharge test was performed at 25 °C in the following manner. A constant current-constant voltage charge was performed at a current of 0.3 C with a charge cutoff voltage being set to 4.25 V. A condition for terminating the charge was set to the point when a current was decreased to 0.1 C. After that, a constant current discharge was performed at a current of 0.3 C with a discharge cutoff voltage being set to 2.50 V. After each of the discharge and the charge, a rest of 10 minutes was provided. The above charge and discharge were performed for 300 cycles. A percentage of the discharge capacity at the three-hundredth cycle to the discharge capacity at the first cycle in the above-described charge and discharge cycle test was obtained as a post-cycle capacity retention rate. Tables 2 and 3 show the results.

[Table 2]

| | Negative electrode active material layer | | | | | | | | Evaluation | |
| | Si | | | SE | Conductive agent | | | Binder | Discharge capacity ratio (1.0 C/0.1 C) | Post-cycle capacity retention rate |
| | | | | | SWCNT | VGCF | Total | | | |
| | Content (mass %) | Average particle size ($\mu$m) | BET specific surface area ($m^2$/g) | Content (mass %) | Content (mass %) | Content (mass %) | Content (mass %) | Content (mass %) | (%) | (%) |
| Example 6 | 44.0 | 0.7 | 13.3 | 50.0 | 0.5 | 2.5 | 3.0 | 3.0 | 57.3 | - |
| Example 7 | 44.0 | 1.3 | 8.4 | 50.0 | 0.5 | 2.5 | 3.0 | 3.0 | 52.8 | - |
| Example 8 | 44.0 | 1.6 | 7.5 | 50.0 | 0.5 | 2.5 | 3.0 | 3.0 | 61.2 | 84.1 |
| Example 9 | 44.0 | 1.9 | 6.5 | 50.0 | 0.5 | 2.5 | 3.0 | 3.0 | 67.1 | 81.8 |
| Example 10 | 44.0 | 5.3 | 2.5 | 50.0 | 0.5 | 2.5 | 3.0 | 3.0 | 75.6 | 78.7 |
| Example 11 | 44.0 | 9.0 | 2.7 | 50.0 | 0.5 | 2.5 | 3.0 | 3.0 | 81.1 | 69.4 |

[Table 3]

| | Negative electrode active material layer | | | | | | | | Evaluation | |
|---|---|---|---|---|---|---|---|---|---|---|
| | Si | | | SE | Conductive agent | | | Binder | Discharge capacity ratio (1.0 C/0.1 C) | Post-cycle capacity retention rate |
| | | | | | SWCNT | VGCF | Total | | | |
| | Content (mass %) | Average particle size ($\mu$m) | BET specific surface area ($m^2$/g) | Content (mass %) | Content (mass %) | Content (mass %) | Content (mass %) | Content (mass %) | (%) | (%) |
| Example 6 (listed again) | 44.0 | 0.7 | 13.3 | 50.0 | 0.5 | 2.5 | 3.0 | 3.0 | 57.3 | - |
| Example 12 | 30.0 | 0.7 | 13.3 | 64.0 | 0.5 | 2.5 | 3.0 | 3.0 | 77.3 | 88.4 |
| Example 13 | 15.0 | 0.7 | 13.3 | 79.0 | 0.5 | 2.5 | 3.0 | 3.0 | 82.9 | 87.7 |

[Table 4]

| | Negative electrode active material layer | | | | | | | | Evaluation |
|---|---|---|---|---|---|---|---|---|---|
| | Si | | | SE | Conductive agent | | | Binder | Discharge capacity ratio (1.0 C/0.1 C) |
| | | | | | SWCNT | VGCF | Total | | |
| | Content (mass %) | Average particle size ($\mu$m) | BET specific surface area ($m^2/g$) | Content (mass %) | Content (mass %) | Content (mass %) | Content (mass %) | Content (mass %) | (%) |
| Example 14 | 60.0 | 3.2 | 3.8 | 33.5 | 0.5 | 2.5 | 3.0 | 3.5 | 26.6 |
| Example 15 | 52.0 | 3.2 | 3.8 | 41.5 | 0.5 | 2.5 | 3.0 | 3.5 | 30.0 |
| Example 16 | 44.0 | 3.2 | 3.8 | 49.5 | 0.5 | 2.5 | 3.0 | 3.5 | 59.7 |

As indicated in Table 2, the discharge capacity ratio (1.0 C/0.1 C) increased as the average particle size of the simple substance of silicon (Si), which is a substance to be alloyed with a lithium element, increased, and a decrease in the discharge capacity at the time of a high-rate discharge could be suppressed. The larger the average particle size was in the simple substance of silicon (Si) used, the more the occurrence of cracks in the negative electrode active material layer was suppressed after the high-rate discharge test. It is considered that, by using a simple substance of silicon (Si) having a large average particle size, occurrence of cracks in the negative electrode active material layer is suppressed even at the time of a high-rate discharge, and a decrease in the discharge capacity can be suppressed. Meanwhile, as indicated in Table 2, as the average particle size of the simple substance of silicon (Si) decreased, the post-cycle capacity retention rate tended to increase. In all of the non-aqueous electrolyte energy storage devices of Table 2, the initial coulombic efficiency was in the range of 87% to 88%, which means that the initial coulombic efficiency of these non-aqueous electrolyte energy storage devices was also high.

In addition, as indicated in Tables 3 and 4, as the content of the simple substance of silicon (Si) in the negative electrode active material layer was reduced, the discharge capacity ratio (1.0 C/0.1 C) increased, which means that a decrease in the discharge capacity at the time of a high-rate discharge could be suppressed.

[Examples 17 to 22 and Comparative Example 6]

Non-aqueous electrolyte energy storage devices of Examples 17 to 22 and Comparative Example 6 were obtained in the same manner as in Example 1 except that $LiNi_{0.80}Co_{0.15}Al_{0.05}O_2$ was used as the positive electrode active material and the composition of the negative electrode active material layer (negative electrode mixture) was changed to those indicated in Table 5.

The conductive agents described in Table 5 that were used in these Examples and Comparative Example are as follows:

SWCNT: average diameter of 1.6 nm, average length of greater than 5 $\mu$m, BET specific surface area of 1040 $m^2/g$
VGCF: average diameter of 150 nm, average length of 10 to 20 $\mu$m, BET specific surface area of 13 $m^2/g$
MWCNT (A): average diameter of 7 to 15 nm, average length of 5 to 15 $\mu$m, BET specific surface area of 200 to 250 $m^2/g$
MWCNT (B): average diameter of 20 to 40 nm, average length of less than 2 $\mu$m, BET specific surface area of 70 to 150 $m^2/g$
MWCNT (C): average diameter of 60 to 100 nm, average length of greater than 5 $\mu$m, BET specific surface area of 40 to 70 $m^2/g$
MWCNT (D): average diameter of 20 to 60 nm, average length of 7 $\mu$m AB (acetylene black): average particle size of 35 nm, BET specific surface 68 $m^2/g$

[Initial Charge and Discharge]

For each of the obtained non-aqueous electrolyte energy storage devices of Examples 17 to 22 and Comparative Example 6, initial charge and discharge was performed at 25 °C in the following manner. A constant current-constant voltage charge was performed at a current of 0.1 C with a charge cutoff voltage being set to 4.25 V. A condition for terminating the charge was set to the point when a current was decreased to 0.025 C. After that, a rest period of 10 minutes was provided. After that, a constant current discharge was performed at a current of 0.1 C with a discharge cutoff voltage being set to 2.50 V. In the above, 1 C was 24 mA. The discharge capacity at this time was defined as an "initial discharge capacity".

[Measurement of Discharge Capacity Retention Rate after High-rate Discharge Test]

For each of the non-aqueous electrolyte energy storage devices of Examples 17 to 22 and Comparative Example 6 which have been subjected to the above-mentioned "initial charge and discharge", a high-rate discharge test was performed at 25 °C in the following manner. A constant current-constant voltage charge was performed at a current of 0.1 C with a charge cutoff voltage being set to 4.25 V. A condition for terminating the charge was set to the point when a current was decreased to 0.025 C. After that, a rest period of 10 minutes was provided. After that, a constant current discharge was performed at a current of 0.1 C with a discharge cutoff voltage being set to 2.50 V. Next, a constant current-constant voltage charge was performed under the same conditions as above, and after a rest period of 10 minutes, a constant current discharge was first performed as a high-rate discharge at a current of 1.0 C with a discharge cutoff voltage being set to 2.50 V, and a constant current discharge was thereafter performed as a residual discharge at a current of 0.1 C with a discharge cutoff voltage being set to 2.50 V. Next, a high-rate discharge test was conducted by adopting the same constant current-constant voltage charge condition, rest condition, and residual discharge condition as described above, and sequentially changing the current during the high-rate discharge to 2.0 C, 3.0 C, and 5.0 C.

After that, charge and discharge were performed under the same conditions as those of the above "initial charge and discharge", and the discharge capacity after the high-rate discharge test was measured. A percentage of the discharge capacity after the high-rate discharge test to the initial discharge capacity was obtained as a discharge capacity retention rate exhibited after a high-rate discharge test. Table 5 shows the results.

[Table 5]

| | Negative electrode active material layer | | | | | | | | Evaluation |
| | Si | | SE | Conductive agent | | | | Binder | Discharge capacity retention rate after high-rate discharge test |
| | | | | SWCNT | Other conductive agent | | Total | | |
| | Content (mass %) | Average particle size (μm) | Content (mass %) | Content (mass %) | Type | Content (mass %) | Content (mass %) | Content (mass %) | (%) |
| Example 17 | 44.0 | 3.2 | 49.5 | 0.5 | VGCF | 2.5 | 3.0 | 3.5 | 100.0 |
| Example 18 | 44.0 | 3.2 | 49.5 | 0.5 | AB | 2.5 | 3.0 | 3.5 | 99.8 |
| Example 19 | 44.0 | 3.2 | 51.5 | 1.0 | - | 0.0 | 1.0 | 3.5 | 99.7 |
| Example 20 | 44.0 | 3.2 | 49.5 | 0.5 | MWCNT(A) | 2.5 | 3.0 | 3.5 | 97.7 |
| Example 21 | 44.0 | 3.2 | 49.5 | 0.5 | MWCNT(B) | 2.5 | 3.0 | 3.5 | 98.0 |
| Example 22 | 44.0 | 3.2 | 49.5 | 0.5 | MWCNT(C) | 2.5 | 3.0 | 3.5 | 94.3 |
| Comparative Example 6 | 44.0 | 3.2 | 49.5 | 0.0 | VGCF/ MWCNT(D) | 2.5/0.5 | 3.0 | 3.5 | 80.3 |

As indicated in Table 5, in each of the non-aqueous electrolyte energy storage devices of Examples 17 to 22 in which the conductive agent contained the SWCNT, the discharge capacity retention rate exhibited after the high-rate discharge test was not less than 90%, and a decrease in the discharge capacity after the high-rate discharge was suppressed. In particular, in each of the non-aqueous electrolyte energy storage devices of Example 17 using the VGCF, which is a fibrous conductive agent having the average diameter of 120 nm or more, together with the SWCNT as the conductive agent, Example 18 using the AB, which is a particulate conductive agent, together with the SWCNT as the conductive agent, and Example 19 using only the SWCNT as the conductive agent, the discharge capacity retention rate exhibited after the high-rate discharge test was not less than 99%, and a decrease in discharge capacity after execution of the high-rate discharge was particularly suppressed. In all of the non-aqueous electrolyte energy storage devices of Table 5, the initial coulombic efficiency was in the range of 87% to 89%, which means that the initial coulombic efficiency of these non-aqueous electrolyte energy storage devices was also high.

The present invention can be applied to non-aqueous electrolyte energy storage devices and the like which are used as power sources of electronic devices such as personal computers or communication terminals, automobiles, and the like.

DESCRIPTION OF REFERENCE NUMERALS

1, 1A Non-aqueous electrolyte energy storage device
2, 2A Positive electrode
3, 3A Negative electrode
4, 4A Separation layer
5, 5A Positive electrode substrate
6, 6A Positive electrode active material layer
7, 7A Negative electrode substrate
8, 8A Negative electrode active material layer
20 Energy storage unit
30 Energy storage apparatus

**Claims**

1. A negative electrode for a non-aqueous electrolyte energy storage device comprising a negative electrode active material layer containing a negative electrode active material, a solid electrolyte, and a conductive agent, wherein:

   the negative electrode active material contains a substance to be alloyed with a lithium element; and
   the conductive agent contains a single-wall carbon nanotube.

2. The negative electrode for a non-aqueous electrolyte energy storage device according to claim 1, wherein a content of the single-wall carbon nanotube in the negative electrode active material layer is 0.1% by mass or more and 3% by mass or less.

3. The negative electrode for a non-aqueous electrolyte energy storage device according to claim 1 or 2, wherein a content of a fibrous conductive agent in the conductive agent is 90% by mass or more.

4. The negative electrode for a non-aqueous electrolyte energy storage device according to claim 1 or 2, wherein a content of the single-wall carbon nanotube in the negative electrode active material layer is 0.3% by mass or more.

5. The negative electrode for a non-aqueous electrolyte energy storage device according to claim 1 or 2, wherein the substance to be alloyed with a lithium element does not have a three-dimensional network structure.

6. The negative electrode for a non-aqueous electrolyte energy storage device according to claim 1 or 2, wherein an average pore size of the substance to be alloyed with a lithium element is 30 nm or less.

7. The negative electrode for a non-aqueous electrolyte energy storage device according to claim 1 or 2, wherein an average particle size of the substance to be alloyed with a lithium element is 0.6 $\mu$m or more.

8. The negative electrode for a non-aqueous electrolyte energy storage device according to claim 1 or 2, wherein an average particle size of the substance to be alloyed with a lithium element is 1.5 $\mu$m or more.

9. The negative electrode for a non-aqueous electrolyte energy storage device according to claim 1 or 2, wherein a BET specific surface area of the substance to be alloyed with a lithium element is 8.0 m$^2$/g or less.

10. The negative electrode for a non-aqueous electrolyte energy storage device according to claim 1 or 2, wherein a content of the substance to be alloyed with a lithium element in the negative electrode active material layer is 45% by mass or less.

11. The negative electrode for a non-aqueous electrolyte energy storage device according to claim 1 or 2, wherein the conductive agent further contains at least one kind of conductive agent selected from a group consisting of a fibrous conductive agent, which has an average diameter of 120 nm or more, and a particulate conductive agent.

12. The negative electrode for a non-aqueous electrolyte energy storage device according to claim 1 or 2, wherein a content of the single-wall carbon nanotube in the conductive agent is 50% by mass or more.

13. A non-aqueous electrolyte energy storage device comprising the negative electrode for a non-aqueous electrolyte energy storage device according to claim 1 or 2.

14. The non-aqueous electrolyte energy storage device according to claim 13, wherein the non-aqueous electrolyte energy storage device is an all-solid-state energy storage device.

# [ FIG. 1 ]

# [ FIG. 2 ]

[ FIG. 3 ]

## INTERNATIONAL SEARCH REPORT

| International application No. |
| --- |
| **PCT/JP2024/033329** |

| A. | CLASSIFICATION OF SUBJECT MATTER |
| --- | --- |

*H01M 4/134*(2010.01)i; *H01M 4/38*(2006.01)i; *H01M 4/62*(2006.01)i; *H01M 10/052*(2010.01)i; *H01M 10/0562*(2010.01)i
FI:   H01M4/134; H01M4/38 Z; H01M4/62 Z; H01M10/052; H01M10/0562

According to International Patent Classification (IPC) or to both national classification and IPC

| B. | FIELDS SEARCHED |
| --- | --- |

Minimum documentation searched (classification system followed by classification symbols)

H01M4/134; H01M4/38; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-103140 A (DAIKIN INDUSTRIES, LTD.) 07 July 2022 (2022-07-07)<br>    claim 1, paragraphs [0005], [0027], [0076]-[0077], [0080]-[0081], [0083], [0086], [0099], [0149]-[0151], [0167] | 1-14 |
| X | CN 115458730 A (SUZHOU LI'AN NEW ENERGY TECHNOLOGY CO., LTD.) 09 December 2022 (2022-12-09)<br>    claim 1, paragraphs [0039]-[0046], [0077]-[0078] | 1, 3-6, 9-14 |
| A | | 2, 7-8 |
| A | CN 115719809 A (BTR NEW MATERIAL GROUP CO., LTD.) 28 February 2023 (2023-02-28)<br>    entire text, all drawings | 1-14 |
| A | CN 115513432 A (BEIJING WELION NEW ENERGY TECHNOLOGY CO., LTD.) 23 December 2022 (2022-12-23)<br>    entire text, all drawings | 1-14 |

☑ Further documents are listed in the continuation of Box C.     ☑ See patent family annex.

| | |
| --- | --- |
| *       Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **28 November 2024** | **10 December 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/033329** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 114944465 A (SONGSHAN LAKE MATERIALS LABORATORY) 26 August 2022 (2022-08-26) <br> entire text, all drawings | 1-14 |
| A | CN 113422015 A (ZHEJIANG KAIHUA YUANTONG SILICON INDUSTRY CO., LTD.) 21 September 2021 (2021-09-21) <br> entire text, all drawings | 1-14 |

Form PCT/ISA/210 (second sheet) (July 2022)

**INTERNATIONAL SEARCH REPORT**
Information on patent family members

International application No.

**PCT/JP2024/033329**

| Patent document cited in search report | | | Publication date (day/month/year) | Patent family member(s) | | | Publication date (day/month/year) |
|---|---|---|---|---|---|---|---|
| JP | 2022-103140 | A | 07 July 2022 | US | 2023/0378471 | A1 | |
| | | | | claim 1, paragraphs [0012], [0049], [0123]-[0124], [0127]-[0128], [0130], [0133], [0161], [0230]-[0234], [0261] | | | |
| | | | | WO | 2022/138940 | A1 | |
| | | | | EP | 4269361 | A1 | |
| | | | | TW | 202235566 | A | |
| | | | | CN | 116568639 | A | |
| | | | | KR | 10-2023-0125000 | A | |
| CN | 115458730 | A | 09 December 2022 | (Family: none) | | | |
| CN | 115719809 | A | 28 February 2023 | US | 2024/0282924 | A1 | |
| | | | | entire text, all drawings | | | |
| | | | | WO | 2023/024625 | A1 | |
| | | | | EP | 4184612 | A1 | |
| | | | | KR | 10-2023-0031211 | A | |
| | | | | JP | 2023-542766 | A | |
| CN | 115513432 | A | 23 December 2022 | (Family: none) | | | |
| CN | 114944465 | A | 26 August 2022 | WO | 2023/206592 | A1 | |
| | | | | entire text, all drawings | | | |
| | | | | WO | 2023/206593 | A1 | |
| | | | | WO | 2023/208058 | A1 | |
| | | | | CN | 116705988 | A | |
| CN | 113422015 | A | 21 September 2021 | (Family: none) | | | |

Form PCT/ISA/210 (patent family annex) (July 2022)

**REFERENCES CITED IN THE DESCRIPTION**

**Patent documents cited in the description**

- JP 2021082514 A